# EUROPEAN PATENT APPLICATION

(11) **EP 4 195 771 A1**
(43) Date of publication of application: **14.06.2023**
(21) Application number: 21860158.1
(22) Date of filing: 12.08.2021
(51) Int. Cl.: H04W 36/00

(54) **COMMUNICATION METHOD AND APPARATUS FOR NON-TERRESTRIAL NETWORK**

(30) Priority: 27.08.2020 CN 202010877427
(71) Applicant: Huawei Technologies Co., Ltd., Shenzhen, Guangdong 518129 (CN)
(72) Inventor: LUO, Hejia, Shenzhen, Guangdong 518129 (CN); ZHOU, Jianwei, Shenzhen, Guangdong 518129 (CN); WANG, Xiaolu, Shenzhen, Guangdong 518129 (CN); XU, Chenlei, Shenzhen, Guangdong 518129 (CN); WANG, Yu, Shenzhen, Guangdong 518129 (CN); CHEN, Ying, Shenzhen, Guangdong 518129 (CN); WANG, Jun, Shenzhen, Guangdong 518129 (CN)
(74) Representative: Gill Jennings & Every LLP
(86) International application number: PCT/CN2021/112305
(87) International publication number: WO 2022/042319

(57) **Abstract**

This application discloses a non-terrestrial network communication method and apparatus, to reduce a probability that a terminal misses a paging message, and reduce signaling overheads in a cell reselection process. The method includes: A terminal receives first configuration information, where the first configuration information indicates N paging configurations configured for the terminal; and if the terminal satisfies a first effective condition, listens to a paging message at a time-frequency resource location indicated by a first paging configuration in the N paging configurations. Each of the N paging configurations includes a time-frequency resource location of the paging message. The first effective condition corresponds to the first paging configuration. It may be considered that the N paging configurations and M effective conditions are preconfigured by a first network device for the terminal. When the terminal satisfies an effective condition of a configuration, the terminal may use the configuration. In this way, the terminal does not need to obtain the corresponding configuration from a received system message, to avoid missing receiving of the configuration information sent by the network device.

## Description

### CROSS-REFERENCE TO RELATED APPLICATIONS

This application claims priority to Chinese Patent Application No. 202010877427.5, filed with the China National Intellectual Property Administration on August 27, 2020 and entitled "NON-TERRESTRIAL NETWORK COMMUNICATION METHOD AND APPARATUS", which is incorporated herein by reference in its entirety.

### TECHNICAL FIELD

This application relates to the field of antenna technologies, and in particular, to a non-terrestrial network (non terrestrial networks, NTN) communication method and apparatus.

### BACKGROUND

An NTN is introduced in a new radio (new radio, NR) system. In the NTN, a base station or a part of functions of a base station is/are deployed on a high-altitude platform or a satellite, to provide seamless coverage for a terminal. Because the satellite moves around the earth, the terminal also moves relative to the satellite. As a result, the terminal using a network service may move from a coverage area of a satellite to a coverage area of another satellite. To ensure communication continuity and quality of service, the terminal needs to perform cell handover or cell reselection.

Specifically, after the terminal in an idle mode leaves a coverage area of a current cell, the terminal performs cell reselection based on a configuration of the base station, and selects a new cell that satisfies a specific condition for camping. In a cell reselection process, the base station separately broadcasts a system message and a paging message. After the terminal selects the new cell, the terminal listens to a system message of the new cell, and obtains configuration information of a paging message of the new cell, to determine a time-frequency resource location at which the terminal needs to listen to the paging message.

If there may be an intersection or similarity between a transmission time of a system message and a transmission time of a paging message of a cell, the terminal may miss the paging message sent by the base station when listening to the system message in the new cell. For example, there may be an intersection or similarity between the transmission time of the system message and the transmission time of the paging message. In this case, before the terminal receives the system message or does not decode the system message, the paging message sent by the base station arrives at the terminal, that is, the terminal misses the paging message.

### SUMMARY

This application provides an NTN communication method and apparatus, to reduce a probability that a terminal misses a paging message, and reduce signaling overheads in a cell reselection process.

According to a first aspect, an embodiment of this application provides an NTN communication method. The method may be performed by a first communication apparatus. The first communication apparatus may be a communication device or a communication apparatus that can support a communication device to implement a function required in the method, for example, a chip system. An example in which the communication device is a terminal is used below for descriptions. The method includes the following steps.

A terminal receives first configuration information, where the first configuration information indicates N paging configurations configured for the terminal; and if the terminal satisfies a first effective condition, listens to a paging message at a time-frequency resource location indicated by a first paging configuration in the N paging configurations. Each of the N paging configurations includes a time-frequency resource location of the paging message. The first effective condition corresponds to the first paging configuration. N is an integer greater than or equal to 1.

According to a second aspect, an embodiment of this application provides an NTN communication method. The method may be performed by a first communication apparatus. The first communication apparatus may be a communication device or a communication apparatus that can support a communication device to implement a function required in the method, for example, a chip system. An example in which the communication device is a terminal is used below for descriptions. The method includes the following steps.

A terminal receives first configuration information. The first configuration information indicates N cell measurement configurations configured for the terminal. If the terminal satisfies a first effective condition, the terminal measures a cell frequency set at a time-frequency resource location that corresponds to the cell frequency set and that is indicated by a first cell measurement configuration in the N cell measurement configurations. One of the N cell measurement configurations includes a cell frequency set, a time-frequency resource location corresponding to the cell frequency set, and a cell ID set corresponding to the cell frequency set. The first effective condition corresponds to the first cell measurement configuration. N is an integer greater than or equal to 1.

According to a third aspect, an embodiment of this application provides an NTN communication method. The method may be performed by a first communication apparatus. The first communication apparatus may be a communication device or a communication apparatus that can support a communication device to implement a function required in the method, for example, a chip system. An example in which the communication device is a terminal is used below for descriptions. The method includes the following steps.

A terminal receives first configuration information. The first configuration information indicates N access configurations configured for the terminal. Each of the N access configurations includes a physical random access channel (physical random access channel, PRACH) configuration and a time-frequency resource location corresponding to a random access opportunity (PRACH occasion, RO). If the terminal satisfies a first effective condition, the terminal performs random access at the time-frequency resource location corresponding to the RO by using a PRACH configuration indicated by a first access configuration in the N access configurations. The first effective condition corresponds to the first access configuration. N is an integer greater than or equal to 1.

According to a fourth aspect, an embodiment of this application provides an NTN communication method. The method may be performed by a first communication apparatus. The first communication apparatus may be a communication device or a communication apparatus that can support a communication device to implement a function required in the method, for example, a chip system. An example in which the communication device is a terminal is used below for descriptions. The method includes the following steps.

A terminal receives first configuration information. The first configuration information indicates N listening configurations configured for the terminal. If the terminal satisfies a first effective condition, the terminal listens to a system message on a time-frequency resource indicated by a first listening configuration in the N listening configurations. Each of the N listening configurations includes a time-frequency resource location for listening to the system message. The first effective condition corresponds to the first listening configuration. N is an integer greater than or equal to 1.

In this embodiment of this application, a network device may preconfigure a plurality of configurations of related information for the terminal, for example, a plurality of paging configurations, a plurality of cell measurement configurations, a plurality of access configurations, and a plurality of configurations for listening to the system message. In addition, the network device separately configures corresponding effective conditions for the plurality of configurations. When the terminal satisfies an effective condition of a configuration, the terminal may use the configuration. Because the terminal uses the configuration information based on the effective condition, even if the network device configures a plurality of configurations in advance, the terminal may also specify an occasion for using a configuration. In this way, the terminal does not need to obtain the corresponding configuration from the received system message, to avoid missing receiving of the configuration information sent by the network device.

In a possible implementation, the method further includes: The terminal receives second configuration information. The second configuration information includes M effective conditions. M is an integer greater than or equal to 1, and M is less than or equal to N. In this solution, the M effective conditions respectively corresponding to the N configurations may be delivered by the network device. In this way, the terminal does not need to prestore a correspondence between N pieces of configuration information of a plurality of network devices and the M effective conditions, to save storage space of the terminal.

In a possible implementation, the effective condition includes one or more of a time, a location label, a frequency, and a polarization direction. For example, the first configuration information indicates N paging configurations, and the first effective condition includes one or more of a first time, a first location label, a first frequency, and a first polarization direction that correspond to a first paging configuration. For example, the first configuration information indicates N cell measurement configurations, and the first effective condition includes one or more of a first time, a first location label, and a first polarization direction that correspond to a first cell measurement configuration. For example, the first configuration information indicates N access configurations, and the first effective condition includes one or more of a first time, a first location label, a first frequency, and a first polarization direction that correspond to a first access configuration. For example, the first configuration information indicates the N listening configurations, and the first effective condition includes one or more of a first time, a first location label, a first frequency, and a first polarization direction that correspond to the first listening configuration.

In this solution, a moving track of a first network device is regular. In this case, the first network device may clearly learn a location of the first network device in a time period. That is, the first network device may accurately determine a time-frequency resource on which a paging message is sent to the terminal in a time period. Therefore, the time may be used as an effective condition of the paging configuration.

It should be understood that when a distance between the terminal and the first network device is short, there is a high probability that the terminal is in a coverage area of the first network device. Further, a possibility that the terminal is in a coverage area of a beam may be determined based on a distance between the terminal and the beam of the first network device. The first network device sends the paging message based on a beam resource of the first network device. Therefore, a beam location of the first network device may be used as an effective condition of the paging configuration.

Usually, beam configuration information of the first network device is related to a service of the terminal. In a time period, even if the first network device uses different frequencies/polarization directions, for a same coverage area, resource configuration statuses of the coverage area are usually similar. In this case, it may be considered that in different time periods, beams of different colors are reflected in different frequencies/polarization directions. Therefore, the frequency/polarization direction may be used as an effective condition of the paging configuration.

In a possible implementation, the N paging configurations are in a one-to-one correspondence with the M effective conditions. This solution may be applicable to a beam rule. It is considered that the first network device sends the paging message in an optimal beam in a time period, and only one paging configuration needs to be configured, to reduce resource overheads for sending the paging message.

In a possible implementation, N is greater than M, and at least one of the M effective conditions corresponds to at least two paging configurations. This solution may be applicable to a case in which beams are irregular, that is, the terminal may be covered by a plurality of beams in a same time period. In this case, one effective condition may correspond to at least two paging configurations, to ensure that the first network device may send the paging message on all beams that potentially cover the terminal.

In a possible implementation, the effective condition includes a time, and two adjacent times do not overlap. This solution may be applicable to a beam rule. It is considered that the first network device sends the paging message in an optimal beam in a time period, and only one paging configuration needs to be configured, to reduce resource overheads for sending the paging message. The terminal determines, based on the paging configuration, to listen to the paging message on one beam, and does not need to listen to a plurality of beams. This can reduce power consumption of the terminal.

In a possible implementation, the effective condition includes a time, and there is an intersection between two adjacent times. This solution may be applicable to a case in which beams are irregular. To be specific, the terminal may be covered by a plurality of beams in a same time period, and the first network device may send the paging message on all beams that potentially cover the terminal. To prevent the terminal from missing receiving of the paging message, an effective time may be extended, to ensure that the terminal listens to the paging message on all the beams that potentially cover the terminal.

In a possible implementation, the effective condition is a location label. The method further includes: The terminal sends location information when a change amount of a location of the terminal within preset duration exceeds a preset threshold; and the terminal further receives third configuration information before listening to the paging message. The location information indicates the location of the terminal. The third configuration information indicates at least one paging configuration. The at least one paging configuration is determined based on the location information. In this solution, the first network device may update, based on the location reported by the terminal, the N paging configurations configured for the terminal, to avoid that the N paging configurations configured for the terminal are inappropriate due to an inaccurate location of the terminal.

In a possible implementation, the first configuration information further includes identifiers of the N paging configurations. In this solution, the N paging configurations may be bound to the beam by using the identifier For different terminals in a beam coverage area, the N paging configurations are the same, but the M effective conditions may be different. In this case, the first network device may configure the N paging configurations at a granularity of a cell, and configure the M effective conditions at a granularity of a terminal. That is, the first network device does not need to separately configure one set of N paging configurations for different terminals, to reduce signaling overheads. For the terminal, the corresponding N paging configurations may be determined based on the identifiers of the N paging configurations. When an effective condition is satisfied, a paging configuration corresponding to the effective condition is used based on the M effective conditions configured by the first network device for the terminal.

According to a fifth aspect, an embodiment of this application provides an NTN communication method. The method may be performed by a second communication apparatus. The second communication apparatus may be a communication device or a communication apparatus that can support a communication device to implement a function required in the method, for example, a chip system. An example in which the communication device is a network device is used below for descriptions. The method includes:
generating first configuration information, where the first configuration information indicates N paging configurations configured for a terminal, each of the N paging configurations includes a time-frequency resource location of a paging message, and N is an integer greater than or equal to 1; and
sending the first configuration information, and if a first effective condition is satisfied, sending the paging message at a time-frequency resource location indicated by a first paging configuration in the N paging configurations, where the first effective condition corresponds to the first paging configuration.

According to a sixth aspect, an embodiment of this application provides an NTN communication method. The method may be performed by a second communication apparatus. The second communication apparatus may be a communication device or a communication apparatus that can support a communication device to implement a function required in the method, for example, a chip system. An example in which the communication device is a network device is used below for descriptions. The method includes:
generating first configuration information, where the first configuration information indicates N cell measurement configurations configured for a terminal, one of the N cell measurement configurations includes a cell frequency set, a time-frequency resource location corresponding to the cell frequency set, and a cell ID set corresponding to the cell frequency set, and N is an integer greater than or equal to 1; and
sending the first configuration information, and if a first effective condition is satisfied, sending a measurement signal of the cell ID set at a time-frequency resource location that corresponds to the cell frequency set and that is indicated by a first cell measurement configuration in the N cell measurement configurations, where the first effective condition corresponds to the first cell measurement configuration.

According to a seventh aspect, an embodiment of this application provides an NTN communication method. The method may be performed by a second communication apparatus. The second communication apparatus may be a communication device or a communication apparatus that can support a communication device to implement a function required in the method, for example, a chip system. An example in which the communication device is a network device is used below for descriptions. The method includes:
generating first configuration information, where the first configuration information indicates N access configurations configured for a terminal, each of the N access configurations includes a PRACH configuration and a time-frequency resource location corresponding to an RO, and N is an integer greater than or equal to 1; and
sending the first configuration information, and if a first effective condition is satisfied, sending a PRACH configuration indicated by a first access configuration in the N access configurations, where the first effective condition corresponds to the first access configuration.

According to an eighth aspect, an embodiment of this application provides an NTN communication method. The method may be performed by a second communication apparatus. The second communication apparatus may be a communication device or a communication apparatus that can support a communication device to implement a function required in the method, for example, a chip system. An example in which the communication device is a network device is used below for descriptions. The method includes:
generating first configuration information, where the first configuration information indicates N listening configurations configured for a terminal, each of the N listening configurations includes a time-frequency resource location for listening to a system message, and N is an integer greater than or equal to 1; and
sending the first configuration information, and if a first effective condition is satisfied, sending the system message on a time-frequency resource indicated by a first listening configuration in the N listening configurations, where the first effective condition corresponds to the first listening configuration.

In a possible implementation, the method further includes: sending second configuration information. The second configuration information includes M effective conditions. M is an integer greater than or equal to 1, and M is less than or equal to N.

In a possible implementation, the first configuration information indicates N paging configurations, and the first effective condition includes one or more of a first time, a first location label, a first frequency, and a first polarization direction that correspond to a first paging configuration; or
the first configuration information indicates N cell measurement configurations, and the first effective condition includes one or more of a first time, a first location label, and a first polarization direction that correspond to a first cell measurement configuration; or
the first configuration information indicates N access configurations, and the first effective condition includes one or more of a first time, a first location label, a first frequency, and a first polarization direction that correspond to a first access configuration; or
the first configuration information indicates N listening configurations, and the first effective condition includes one or more of a first time, a first location label, a first frequency, and a first polarization direction that correspond to a first listening configuration.

In a possible implementation, the N paging configurations are in a one-to-one correspondence with the M effective conditions.

N is greater than M. At least one of the M effective conditions corresponds to at least two paging configurations.

In a possible implementation, the effective condition includes a time. Two adjacent times do not overlap, or there is an intersection between two adjacent times.

In a possible implementation, the effective condition is a location label, and the method further includes:
receiving location information, where the location information indicates a location of the terminal; and
sending third configuration information, where the third configuration information indicates at least one paging configuration, and the at least one paging configuration is determined based on the location information.

In a possible implementation, the first configuration information further includes identifiers of the N paging configurations.

For technical effects brought by the fifth aspect to the eighth aspect or the possible implementations of the fifth aspect to the eighth aspect, refer to the description of the technical effects of the first aspect to the fourth aspect or the possible implementations of the first aspect to the fourth aspect.

According to a ninth aspect, an embodiment of this application provides a communication apparatus. The communication apparatus has a function of implementing behavior in the method embodiment of the first aspect, the second aspect, the third aspect, or the fourth aspect. The function may be implemented by hardware, or may be implemented by hardware executing corresponding software. The hardware or the software includes one or more modules corresponding to the foregoing function.

In a possible implementation, the communication apparatus has a function of implementing behavior in the method embodiment of the first aspect, and the communication apparatus includes a transceiver module and a processing module.

The transceiver module is configured to receive first configuration information. The first configuration information indicates N paging configurations configured for the communication apparatus. Each of the N paging configurations includes a time-frequency resource location of a paging message. N is an integer greater than or equal to 1.

If the processing module determines that a first effective condition is satisfied, the transceiver module is further configured to listen to the paging message at a time-frequency resource location indicated by a first paging configuration in the N paging configurations. The first effective condition corresponds to the first paging configuration.

In a possible implementation, the communication apparatus has a function of implementing behavior in the method embodiment of the second aspect, and the communication apparatus includes a transceiver module and a processing module.

The transceiver module is configured to: receive first configuration information, where the first configuration information indicates N cell measurement configurations configured for the communication apparatus, one of the N cell measurement configurations includes a cell frequency set, a time-frequency resource location corresponding to the cell frequency set, and a cell ID set corresponding to the cell frequency set, and N is an integer greater than or equal to 1; and
if the processing module determines that a first effective condition is satisfied, measure the cell frequency set at a time-frequency resource location that corresponds to the cell frequency set and that is indicated by a first cell measurement configuration in the N cell measurement configurations, where the first effective condition corresponds to the first cell measurement configuration.

In a possible implementation, the communication apparatus has a function of implementing behavior in the method embodiment of the third aspect, and the communication apparatus includes a transceiver module and a processing module.

The transceiver module is configured to: receive first configuration information, where the first configuration information indicates N access configurations configured for the communication apparatus, each of the N access configurations includes a PRACH configuration and a time-frequency resource location corresponding to an RO, and N is an integer greater than or equal to 1; and
if the processing module determines that a first effective condition is satisfied, perform random access at the time-frequency resource location corresponding to the RO by using a PRACH configuration indicated by a first access configuration in the N access configurations, where the first effective condition corresponds to the first access configuration.

In a possible implementation, the communication apparatus has a function of implementing behavior in the method embodiment of the fourth aspect, and the communication apparatus includes a transceiver module and a processing module.

The transceiver module is configured to receive first configuration information. The first configuration information indicates N listening configurations configured for the communication apparatus. Each of the N listening configurations includes a time-frequency resource location for listening to a system message. N is an integer greater than or equal to 1.

If the processing module determines that a first effective condition is satisfied, the transceiver module is further configured to listen to the system message on a time-frequency resource indicated by a first listening configuration in the N listening configurations. The first effective condition corresponds to the first listening configuration.

In an optional implementation, the transceiver module is further configured to receive second configuration information. The second configuration information includes M effective conditions. M is an integer greater than or equal to 1, and M is less than or equal to N.

In an optional implementation, the first configuration information indicates N paging configurations, and the first effective condition includes one or more of a first time, a first location label, a first frequency, and a first polarization direction that correspond to a first paging configuration; or
the first configuration information indicates N cell measurement configurations, and the first effective condition includes one or more of a first time, a first location label, and a first polarization direction that correspond to a first cell measurement configuration; or
the first configuration information indicates N access configurations, and the first effective condition includes one or more of a first time, a first location label, a first frequency, and a first polarization direction that correspond to a first access configuration; or
the first configuration information indicates N listening configurations, and the first effective condition includes one or more of a first time, a first location label, a first frequency, and a first polarization direction that correspond to a first listening configuration.

In an optional implementation, the N paging configurations are in a one-to-one correspondence with the M effective conditions.

N is greater than M. At least one of the M effective conditions corresponds to at least two paging configurations.

In an optional implementation, the effective condition includes a time. Two adjacent times do not overlap, or there is an intersection between two adjacent times.

In an optional implementation, the effective condition is a location label, and the transceiver module is further configured to:
send location information when a change amount of a location within preset duration exceeds a preset threshold, where the location information indicates the location of the communication apparatus; and
receive third configuration information before listening to the paging message, where the third configuration information indicates at least one paging configuration, and the at least one paging configuration is determined based on the location information.

For technical effects brought by the ninth aspect or the possible implementations of the ninth aspect, refer to the description of the technical effects of the first aspect to the fourth aspect or the possible implementations of the first aspect to the fourth aspect.

According to a tenth aspect, an embodiment of this application provides a communication apparatus. The communication apparatus has a function of implementing behavior in the method embodiment of the fifth aspect, the sixth aspect, the seventh aspect, or the eighth aspect. The function may be implemented by hardware, or may be implemented by hardware executing corresponding software. The hardware or the software includes one or more modules corresponding to the foregoing function.

In a possible implementation, the communication apparatus has a function of implementing behavior in the method embodiment of the fifth aspect, and the communication apparatus includes a transceiver module and a processing module.

The processing module is configured to generate first configuration information. The first configuration information indicates N paging configurations configured for a terminal. Each of the N paging configurations includes a time-frequency resource location of a paging message. N is an integer greater than or equal to 1.

The transceiver module is configured to: send the first configuration information, and if a first effective condition is satisfied, send the paging message at a time-frequency resource location indicated by a first paging configuration in the N paging configurations. The first effective condition corresponds to the first paging configuration.

In a possible implementation, the communication apparatus has a function of implementing behavior in the method embodiment of the sixth aspect, and the communication apparatus includes a transceiver module and a processing module.

The processing module is configured to generate first configuration information. The first configuration information indicates N cell measurement configurations configured for a terminal. One of the N cell measurement configurations includes a cell frequency set, a time-frequency resource location corresponding to the cell frequency set, and a cell ID set corresponding to the cell frequency set. N is an integer greater than or equal to 1.

The transceiver module is configured to: send the first configuration information, and if a first effective condition is satisfied, send a measurement signal of the cell ID set at a time-frequency resource location that corresponds to the cell frequency set and that is indicated by a first cell measurement configuration in the N cell measurement configurations. The first effective condition corresponds to the first cell measurement configuration.

In a possible implementation, the communication apparatus has a function of implementing behavior in the method embodiment of the seventh aspect, and the communication apparatus includes a transceiver module and a processing module.

The processing module is configured to generate first configuration information. The first configuration information indicates N access configurations configured for a terminal. Each of the N access configurations includes a PRACH configuration and a time-frequency resource location corresponding to a RO. N is an integer greater than or equal to 1.

The transceiver module is configured to: send the first configuration information, and if a first effective condition is satisfied, send a PRACH configuration indicated by a first access configuration in the N access configurations. The first effective condition corresponds to the first access configuration.

In a possible implementation, the communication apparatus has a function of implementing behavior in the method embodiment of the eighth aspect, and the communication apparatus includes a transceiver module and a processing module.

The processing module is configured to generate first configuration information. The first configuration information indicates N listening configurations configured for a terminal. Each of the N listening configurations includes a time-frequency resource location for listening to a system message. N is an integer greater than or equal to 1.

The transceiver module is configured to: send the first configuration information, and if a first effective condition is satisfied, send the system message on a time-frequency resource indicated by a first listening configuration in the N listening configurations. The first effective condition corresponds to the first listening configuration.

In an optional implementation, the transceiver module is further configured to send second configuration information. The second configuration information includes M effective conditions. M is an integer greater than or equal to 1, and M is less than or equal to N.

In an optional implementation, the first configuration information indicates N paging configurations, and the first effective condition includes one or more of a first time, a first location label, a first frequency, and a first polarization direction that correspond to a first paging configuration; or
the first configuration information indicates N cell measurement configurations, and the first effective condition includes one or more of a first time, a first location label, and a first polarization direction that correspond to a first cell measurement configuration; or
the first configuration information indicates N access configurations, and the first effective condition includes one or more of a first time, a first location label, a first frequency, and a first polarization direction that correspond to a first access configuration; or
the first configuration information indicates N listening configurations, and the first effective condition includes one or more of a first time, a first location label, a first frequency, and a first polarization direction that correspond to a first listening configuration.

In an optional implementation, the N paging configurations are in a one-to-one correspondence with the M effective conditions.

N is greater than M. At least one of the M effective conditions corresponds to at least two paging configurations.

In an optional implementation, the effective condition includes a time. Two adjacent times do not overlap, or there is an intersection between two adjacent times.

In an optional implementation, the effective condition is a location label, and the transceiver module is configured to:
receive location information, where the location information indicates a location of the terminal; and
send third configuration information, where the third configuration information indicates at least one paging configuration, and the at least one paging configuration is determined based on the location information.

For technical effects brought by the tenth aspect or the possible implementations of the tenth aspect, refer to the description of the technical effects of the fifth aspect to the eighth aspect or the possible implementations of the fifth aspect to the eighth aspect.

According to an eleventh aspect, an embodiment of this application provides a communication apparatus. The communication apparatus may be the communication apparatus in any possible implementation of the ninth aspect or the communication apparatus in any possible implementation of the tenth aspect in the foregoing embodiments, or a chip disposed in the communication apparatus in any possible implementation of the ninth aspect or the communication apparatus in any possible implementation of the tenth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the terminal in the method embodiment in any one of the first aspect to the fourth aspect, or the communication apparatus performs the method performed by the network device in the method embodiment in any one of the fifth aspect to the eighth aspect.

It should be understood that the communication interface may include a transceiver in the communication apparatus. The transceiver is implemented by, for example, an antenna, a feeder, a codec, and the like in the communication apparatus. Alternatively, if the communication apparatus is a chip disposed in a network device, the communication interface may be an input/output interface of the chip, for example, an input/output pin. The transceiver is used by the communication apparatus to communicate with another device. For example, when the communication apparatus is a network device, the another device is a terminal; or when the communication apparatus is a terminal, the another device is a network device.

According to a twelfth aspect, an embodiment of this application provides a chip system. The chip system includes a processor, and may further include a memory, configured to implement the method performed by the communication apparatus according to any one of the ninth aspect or the possible implementations of the tenth aspect. In a possible implementation, the chip system further includes the memory, configured to store program instructions and/or data. The chip system may include a chip, or may include a chip and another discrete component.

According to a thirteenth aspect, an embodiment of this application provides a communication system. The communication system includes the communication apparatus according to the ninth aspect and the communication apparatus according to the tenth aspect.

According to a fourteenth aspect, this application provides a computer-readable storage medium. The computer-readable storage medium stores a computer program. When the computer program is run, the method performed by the network device in the foregoing aspects is implemented, or the method performed by the terminal in the foregoing aspects is implemented.

According to a fifteenth aspect, a computer program product is provided. The computer program product includes computer program code. When the computer program code is run, the method performed by the network device in the foregoing aspects is performed, or the method performed by the terminal in the foregoing aspects is performed.

For beneficial effects of the eleventh aspect to the fifteenth aspect and the implementations of the eleventh aspect to the fifteenth aspect, refer to the descriptions of the beneficial effects of the method in the first aspect to the eighth aspect and the implementations of the first aspect to the eighth aspect.

### BRIEF DESCRIPTION OF DRAWINGS

FIG. 1 is a schematic diagram of a fixed cell according to an embodiment of this application;
FIG. 2 is a schematic diagram of a moving cell according to an embodiment of this application;
FIG. 3 is a schematic diagram of an architecture of a communication system applicable to an embodiment of this application;
FIG. 4 is a schematic diagram of an architecture of a communication system applicable to an embodiment of this application;
FIG. 5 is a schematic flowchart of an NTN communication method according to an embodiment of this application;
FIG. 6 is a schematic diagram of a regular beam according to an embodiment of this application;
FIG. 7 is a schematic diagram of a paging configuration according to an embodiment of this application;
FIG. 8 is a schematic diagram of an irregular beam according to an embodiment of this application;
FIG. 9 is a schematic diagram of another paging configuration according to an embodiment of this application;
FIG. 10 is a schematic diagram of still another paging configuration according to an embodiment of this application;
FIG. 11 is a schematic diagram of a structure of a communication apparatus according to an embodiment of this application;
FIG. 12 is a schematic diagram of a structure of another communication apparatus according to an embodiment of this application;
FIG. 13 is a schematic diagram of a structure of a communication apparatus according to an embodiment of this application;
FIG. 14 is a schematic diagram of a structure of another communication apparatus according to an embodiment of this application;
FIG. 15 is a schematic diagram of another structure of another communication apparatus according to an embodiment of this application; and
FIG. 16 is a schematic diagram of still another structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

To help a person skilled in the art understand the technical solutions provided in embodiments of this application, a part of terms in embodiments of this application are first explained and described.
(1) A network side device, also referred to as a network device, is an entity configured to transmit or receive a signal on a network side, is a device that connects a terminal side device to a wireless network in a communication system, and is generally connected to a core network through a wired link (for example, an optical fiber cable), for example, a next-generation base station (generation Node B, gNodeB). The network side device may be responsible for receiving data from the core network and forwarding the data to a wireless backhaul device, or receiving data from a wireless backhaul device and forwarding the data to the core network. The network device may be a device configured to communicate with a mobile device. The network device may be an AP in a wireless local area network (wireless local area networks, WLAN), an evolved NodeB (evolutional Node B, eNB, or eNodeB) in a long term evolution (long term evolution, LTE), or may include a next-generation node B (next generation node B, gNB) in a 5G NR system, a relay station or an access point, a vehicle-mounted device, a wearable device and a network device in a future 5G network, a network device in a future evolved public land mobile network (public land mobile network, PLMN), a gNodeB/gNB in an NR system, or the like. The following uses an example in which the network side device is a gNB.

The gNB may include an antenna, a baseband unit (base band unit, BBU), and a remote radio unit (remote radio unit, RRU). The BBU may be connected to the RRU by using a public radio interface (common public radio interface, CPRI), an enhanced CPRI (enhance CPRI, eCPRI), or the like, and the RRU may be connected to the antenna through a feeder. The antenna may be a passive antenna, and is separated from the RRU, and may be connected to the RRU through a cable. Alternatively, the antenna may be an active antenna unit (active antenna unit, AAU), that is, an antenna unit of the AAU and the RRU are integrated together. The AAU implements a part of physical layer processing functions, radio frequency processing, and a function related to an active antenna.

In some deployments, the gNB may include a centralized unit (centralized unit, CU) and a distributed unit (distributed unit, DU). The CU implements a part of functions of the gNB, and the DU implements a part of functions of the gNB. For example, the DU may be configured to receive and send a radio frequency signal, perform conversion between a radio frequency signal and a baseband signal, and perform partial baseband processing. The CU may be configured to perform baseband processing, control the base station, and the like. In some embodiments, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a medium access control (medium access control, MAC) layer, and a physical (physical, PHY) layer. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the network device may be a device including one or more of a CU node, a DU node, and an AAU node. In addition, the CU may be a network device in an access network (radio access network, RAN), or may be a network device in a core network (core network, CN). This is not limited in this application.

(2) A terminal side device, also be referred to as a terminal device or a terminal, may be a wireless terminal device that can receive scheduling and an indication from a network device. The terminal side device may be a device that provides a user with voice and/or data connectivity, a handheld device having a wireless connection function, or another processing device connected to a wireless modem.

The terminal side device may communicate with one or more core networks or an internet by using a radio access network (for example, a radio access network, RAN), and exchange voice and/or data with the RAN. The terminal side device may include user equipment (user equipment, UE), a wireless terminal device, a mobile terminal device, a device-to-device (device-to-device, D2D) communication terminal device, a V2X terminal device, a machine-to-machine/machine type communication (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (or referred to as a "cellular" phone), a computer having a mobile terminal device, a portable, pocket-sized, handheld, or computer built-in mobile apparatus. For another example, the terminal may include a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future evolved public land mobile communication network (public land mobile network, PLMN), a vehicle device in an internet of vehicles (vehicle to everything, V2X), a customer premise equipment (customer premises equipment, CPE), or the like. For another example, the terminal may include a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Alternatively, the terminal may further include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

In embodiments of this application, the network device and the terminal may be deployed on land, including an indoor or outdoor device, a handheld device, or a vehicle-mounted device; or may be deployed on a water surface; or may be deployed on an aircraft, a balloon, or a satellite in the air. Application scenarios of the network device and the terminal are not limited in embodiments of this application.

(3) Discontinuous reception (discontinuous reception, DRX): In a DRX mechanism, a terminal may periodically enter a sleep mode, and does not need to listen to a physical downlink control channel (physical downlink control channel, PDCCH). Implementation mechanisms of DRX are different in three modes: an RRC idle mode, an RRC inactive (inactive) mode, and an RRC connected (connected) mode. DRX in an RRC idle (idle) mode or an RRC inactive mode is also referred to as idle DRX. In idle DRX, the terminal mainly listens to paging. The terminal listens to one paging occasion (paging opportunity/occasion, PO) in a DRX cycle (DRX cycle). If the terminal needs to transmit service data, the terminal usually needs to enter an RRC connected mode from an RRC idle mode or an RRC inactive mode. The terminal monitors a paging indicator channel (paging indicator channel, PICH) only in the PO, and does not monitor the PICH at other moments, to reduce power consumption of the terminal. It should be understood that, generally, in addition to power consumption of the terminal, a system further needs to consider a delay requirement of a service of the terminal. For the terminal, a shorter DRS cycle indicates higher standby power consumption of the terminal, better downlink reachability, and a shorter time for establishing a link to a network device. A longer DRX cycle indicates lower standby power consumption of the terminal, poorer downlink reachability, and a longer time for establishing a mobile-terminated call. In some embodiments, the DRX cycle may be 20 ms, 640 ms, 1280 ms, 2560 ms, or the like.

(4) A paging cycle (Paging) is the same as a DRX cycle (cycle). A terminal needs to detect one PO in each DRX cycle. That is, only one PO of the terminal can be for sending a paging message in each paging cycle. A PO is a set of physical downlink control channel (physical downlink control channel, PDCCH) monitoring opportunities (monitoring occasions). It may include a plurality of slots (slots), subframes, or orthogonal frequency division multiplexing (orthogonal frequency division multiplexing, OFDM) symbols. A network device sends a paging message (paging message) to the terminal over a physical downlink shared channel (physical downlink shared channel, PDSCH) resource, and the network device indicates, by using a PDCCH scrambled by a network temporary identifier (paging radio network temporary identity, P-RNTI) used for the paging message, the PDSCH resource for sending the paging message. The terminal periodically monitors the PDCCH scrambled by the P-RNTI, and parses received downlink control information (downlink control information, DCI) to obtain a time-frequency location of the PDSCH. The terminal parses the paging message at the time-frequency location, to obtain content included in the paging message. It should be noted that, in time domain, the terminal attempts to receive the paging message only in a PO of a specific frame in the paging cycle. Therefore, the network device needs to send the paging message over an air interface in the PO of the specific frame. In this way, the terminal may receive the paging message at this moment. Because the specific frame is for paging transmission, the specific frame may also be referred to as a paging frame (paging frame, PF). It should be understood that the PF includes one or more POs.

(5) A bandwidth part (bandwidth part, BWP) is subset bandwidth of total bandwidth of a cell. Due to multi-color multiplexing of satellites, a satellite beam may be mapped to a BWP. That is, the BWP may be considered as a beam.

(6) A geostationary earth orbit (geostationary earth orbit, GEO) satellite is also referred to as a stationary satellite. The satellite moves at a same speed as an earth rotation system. Therefore, the satellite remains stationary relative to the ground. Correspondingly, a cell of the GEO satellite is also stationary. A coverage area of the GEO satellite cell is large. Generally, a diameter of the cell is 500 km.

(7) Low earth orbit (low-earth orbit, LEO): There are many types of non-stationary satellites, for example, a LEO satellite. The LEO satellite moves fast relative to the ground, at a speed of about 7 km/s. A service coverage area provided by the LEO satellite moves accordingly. There are two modes of cells projected by the LEO satellite to the ground: a fixed cell (fixed cell) and a moving cell (moving cell)

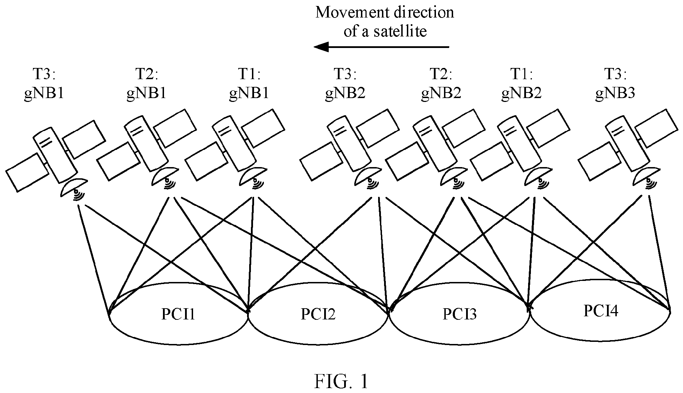

Fixed cell: A cell projected onto the ground is stationary relative to the ground. The LEO satellite above the ground covers a location on the ground by adjusting its antenna angle, and another LEO satellite covers the same location on the ground when the location is beyond coverage of the LEO satellite. As shown in FIG. 1, a fixed cell is mapped as follows: A location of a cell is stationary on the ground, and a moving satellite forms these cells by adjusting a beam of the moving satellite. For example, at a moment T1, a cell 1 and a cell 2 are covered by a beam of a gNB1, and a cell 3 and a cell 4 are covered by a beam of a gNB2. At a moment T2, although both the gNB1 and the gNB2 move leftward, beams of the gNB1 and the gNB2 can still be adjusted to ensure coverage of the cell 1, the cell 2, the cell 3, and the cell 4. At a moment T3, compared with the moment T1, as the gNB1 and the gNB2 have moved far enough, the gNB 1 cannot provide coverage for the cell 2 by adjusting the beam, and the gNB2 cannot provide coverage for the cell 4 by adjusting the beam. In this case, the gNB2 can provide coverage for the cell 2, and the gNB3 can provide coverage for the cell 4 instead.

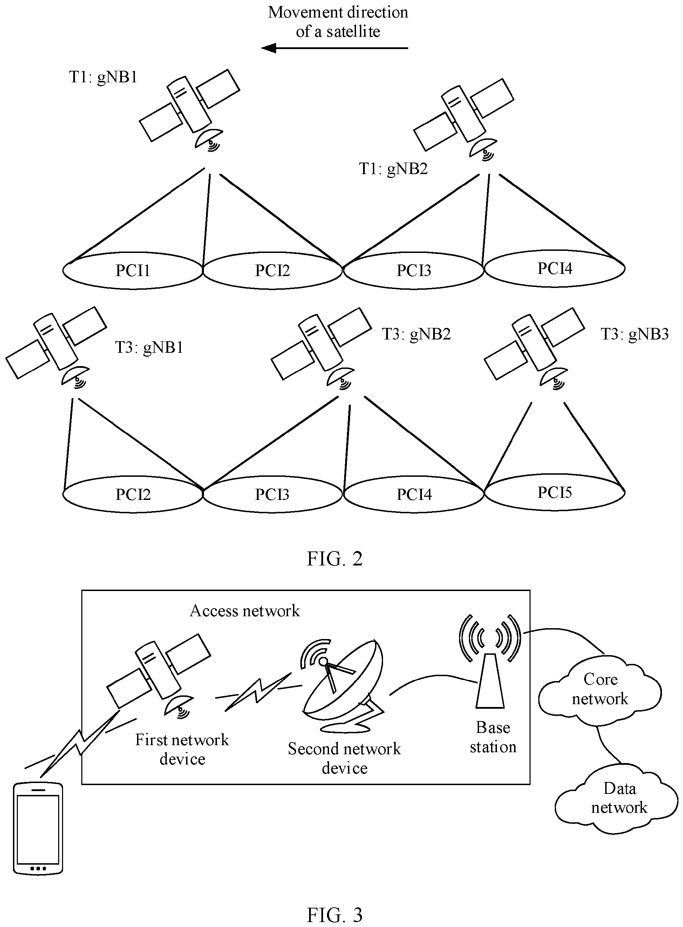

Moving cell: A cell projected onto the ground moves along with the LEO satellite. During the movement, an antenna direction of the LEO satellite remains unchanged. For example, an antenna of the LEO satellite keeps perpendicular to the ground. As shown in FIG. 2, an earth moving cell is mapped as follows: A moving satellite does not dynamically adjust a beam direction of the moving satellite, and a beam generated by the moving satellite moves on the ground as the satellite moves. For example, at a moment T1, an area shown in FIG. 2 is covered by a cell 1, a cell 2, a cell 3, and a cell 4 of a gNB 1 and a gNB 2. At a moment T3, the area is covered by a cell 2, a cell 3, a cell 4, and a cell 5 of the gNB 1, the gNB 2, and the gNB 3.

The foregoing describes some concepts in embodiments of this application, and the following describes technical characteristics in embodiments of this application.

In a wireless communication system, for example, an NR communication system, an NTN is introduced. In the NTN, a base station or a part of functions of a base station is/are deployed on a high-altitude platform or a satellite, to provide seamless coverage for a terminal. Because a satellite moves around the earth, the terminal also moves relative to the satellite. For example, a moving speed of the LEO satellite is 7.5 km/s, and a shortest beam is 20 km. That is, a beam is switched every 3s. For another example, a non-geostationary earth orbit (non geostationary earth orbit, NGEO) satellite moves at a high speed. As a result, a terminal using a network service moves from a coverage area of a satellite to a coverage area of another satellite. To ensure communication continuity and quality of service, the terminal needs to perform cell handover or cell reselection.

However, different satellite beams may be considered as different logical entities based on different communication parameter configurations of the satellite beams. For example, the satellite beam may be considered as a cell, or may be considered as a BWP. Due to different logical entity roles of satellite beams, procedures performed by the terminal due to satellite movement are different. The following separately describes the following procedures performed by the terminal due to satellite movement by considering the satellite beam as a cell or a BWP.
(a) A satellite beam is a cell. In this case, a terminal in an idle mode frequently performs cell reselection, and a terminal in a connected mode frequently performs cell handover. Specifically, after the terminal in the idle mode leaves a coverage area of a current cell, the terminal performs cell reselection based on a configuration of a base station. The terminal needs to measure a cell in a list of candidate cells, and select a new cell that satisfies a specific condition (for example, signal strength or a given selection priority) for camping. After selecting the new cell, the terminal listens to a system message of the new cell, and obtains configuration information of a paging message of the new cell, to determine a time-frequency resource location at which the terminal needs to listen to the paging message
   In a cell reselection process, the base station separately broadcasts a system message and a paging message. After receiving the system message, the terminal may determine, based on the system message, a resource location for receiving the paging message, that is, a resource location at which the paging message is received. If there is an intersection or similarity between a transmission time of the system message and a transmission time of the paging message of the cell, the terminal may miss the paging message sent by the base station when listening to the system message in the new cell. For example, there may be an intersection or similarity between the transmission time of the system message and the transmission time of the paging message. In this case, before the terminal receives the system message or does not decode the system message, the paging message sent by the base station arrives at the terminal, that is, the terminal misses the paging message. In particular, in satellite communication, the terminal needs to frequently measure a cell due to frequent switching of a satellite beam, and a probability that the terminal misses a paging message is higher In addition, the terminal frequently measures a cell, and as the terminal needs to decode a large quantity of system messages, processing overheads of the terminal are high.
(b) A satellite beam is a BWP. In this case, a terminal in a connected mode needs to frequently perform beam/BWP switching as a satellite moves. This is similar to cell handover in LTE. For a terminal in an idle mode, when performing a cell handover, the terminal returns to an initial (initial) BWP and can only stay in the initial BWP to listen to a system message and a paging message. However, when a satellite beam is a BWP, an initial BWP frequency that is originally listened by the terminal disappears as the satellite moves. Although the terminal may receive a satellite beam in a new coverage area, there is no logical correspondence between the satellite beam in the new coverage area and a satellite beam in a coverage area of a source cell. That is, the terminal cannot infer the satellite beam in the coverage area of the source cell based on the satellite beam in the new coverage area. In this way, the terminal can camp on the new beam only by using a cell reselection procedure. As shown in (a), if there may be an intersection or similarity between a transmission time of the system message and a transmission time of the paging message, the terminal may miss the paging message. In addition, if an initial BWP of the terminal is required, based on an existing protocol architecture, the base station and the terminal need to exchange higher-layer signaling, and then the terminal accesses a network. Higher-layer signaling overheads used by the terminal to access the network are higher due to frequent switching of a satellite beam.

In view of this, an embodiment of this application provides a non-terrestrial network communication method. In the method, a satellite base station may configure a paging configuration in a time period for a terminal in advance, and when the terminal satisfies a specific condition, the terminal uses the paging configuration. In this way, the paging configuration does not need to be obtained from the received system message, to avoid missing receiving of the paging message sent by the satellite base station.

The technical solutions provided in embodiments of this application may be applied to a 4th generation mobile communication technology (the 4th generation, 4G) system, a 5G system, an NTN system, vehicle-to-everything (vehicle to everything, V2X), a long term evolution-vehicle (LTE-vehicle, LTE-V), vehicle to vehicle (vehicle to vehicle, V2V), an internet of vehicles, machine type communication (Machine Type Communications, MTC), an internet of things (internet of things, IoT), a long term evolution-machine to machine (LTE-machine to machine, LTE-M), machine to machine (machine to machine, M2M), an internet of things, or a future mobile communication system.

In a possible application scenario, the NTN system may include a satellite system. Based on a satellite altitude, that is, a satellite orbit altitude, the satellite system may be classified into a highly elliptical orbit (highly elliptical orbiting, HEO) satellite, a GEO satellite, a medium earth orbit (medium earth orbit, MEO) satellite, and an LEO satellite. In addition, the NTN system may further include an air network device such as a high-altitude platform (high altitude platform station, HAPS) communication system. The network device in this application is not limited to the foregoing examples.

For example, FIG. 3 is a schematic diagram of an architecture of an NTN network. The NTN network includes a first network device, a second network device, and a terminal. The first network device may be a satellite (or referred to as a satellite base station), for example, may be an HEO satellite, a GEO satellite, an MEO satellite, an LEO satellite, or an HAPS. This is not limited herein. The second network device may be a gateway (or referred to as a ground station, an earth station, or a signal gateway) (gateway), and may be configured to connect the second network device to a core network. In FIG. 3, a communication mode of the first network device is a transparent transmission mode (transparent). To be specific, the first network device serves as a base station for wireless communication, and the second network device may serve as a relay of the first network device, and may transparently transmit a signal between the first network device and a terminal. For example, the second network device may access a core network by using a base station, to access a data network.

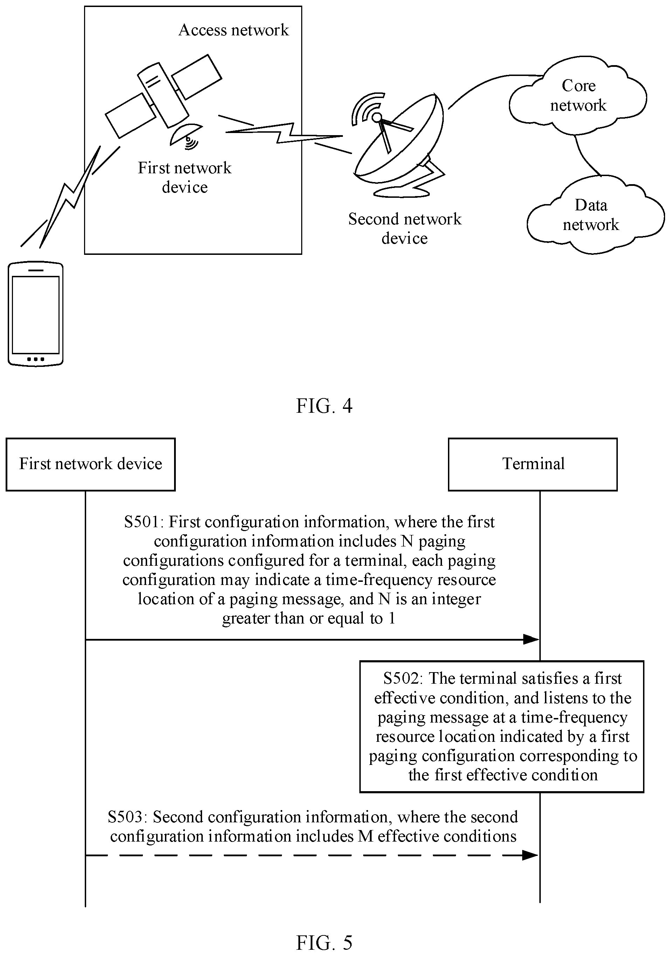

In this embodiment of this application, the communication mode of the first network device may alternatively be a regeneration mode (regenerative). FIG. 4 is a schematic diagram of another architecture of an NTN network. In FIG. 4, a communication mode of the first network device is a regeneration mode, that is, the first network device may serve as a base station for wireless communication. For example, the first network device may be an artificial earth satellite, a high-altitude flight vehicle, or the like that serves as a base station for wireless communication, for example, an evolved base station (eNB) and a 5G base station (gNB). The second network device may transparently transmit signaling between the first network device and a core network.

It should be understood that FIG. 3 and FIG. 4 show only one first network device and one second network device. In actual use, an architecture of a plurality of first network devices and/or one second network device may be used based on a requirement. Each second network device may provide a service for one or more terminals, each second network device may correspond to one or more first network devices, and each first network device may correspond to one or more second network devices. This is not specifically limited in this application.

The following describes in detail the NTN-based communication method provided in embodiments of this application with reference to the accompanying drawings.

FIG. 5 is a flowchart of an NTN-based communication method according to an embodiment of this application. In the following description process, an example in which the method is applied to the communication systems shown in FIG. 3 and FIG. 4 is used. In addition, the method may be performed by two communication apparatuses, and the two communication apparatuses are, for example, a first communication apparatus and a second communication apparatus. For ease of description, in the following descriptions, an example in which the method is performed by a base station and a terminal is used. That is, an example in which the first communication apparatus is a base station (the first network device in FIG. 3 and FIG. 4, or may be referred to as a satellite base station) and the second communication apparatus is a terminal is used. It should be noted that, in this embodiment of this application, only the communication system in FIG. 3 and FIG. 4 is used as an example. This is not limited to this scenario.

Embodiments of this application are intended to preconfigure a plurality of configurations of related information for the terminal, for example, a plurality of paging configurations, a plurality of cell measurement configurations, a plurality of access configurations, and a plurality of configurations for listening to the system message. In addition, the network device separately configures corresponding effective conditions for the plurality of configurations. When the terminal satisfies an effective condition of a configuration, the terminal may use the configuration. Because the terminal uses the configuration information based on the effective condition, even if the network device configures a plurality of configurations in advance, the terminal may also specify an occasion for using a configuration. In this way, the terminal does not need to obtain the corresponding configuration from the received system message, to avoid missing receiving of the configuration information sent by the network device. For ease of description, the following describes an NTN communication method provided in this embodiment of this application by using an example in which a plurality of paging configurations are preconfigured for the terminal in this embodiment of this application.

Specifically, a procedure of the NTN communication method provided in this embodiment of this application is described as follows.

S501: A first network device sends first configuration information to a terminal, and the terminal receives the first configuration information, where the first configuration information includes N paging configurations configured for the terminal, each paging configuration may indicate a time-frequency resource location of a paging message, and N is an integer greater than or equal to 1.

S502: The terminal satisfies a first effective condition, and listens to the paging message at a time-frequency resource location indicated by a first paging configuration corresponding to the first effective condition.

The first network device may configure a paging configuration for the terminal, that is, some configuration information related to paging. In this embodiment of this application, the paging configuration may include a parameter of the paging message in a time domain dimension (which may be referred to as a time domain parameter for short), a parameter in a frequency domain dimension (which may be referred to as a frequency domain parameter for short), and a parameter in a polarization dimension (which may be referred to as a polarization parameter for short). The time domain parameter may indicate a time domain resource location of the paging message, that is, a time domain resource location at which the terminal receives the paging message. For example, the time domain parameter may include a paging cycle, a quantity of PFs in each paging cycle, and a quantity of POs included in each paging frame. The frequency domain parameter may indicate a frequency domain resource location of the paging message, that is, a frequency domain resource location at which the terminal receives the paging message. For example, the frequency domain parameter may include a frequency location of a frequency band resource on which the paging message is located, and a relative location of the paging message in the frequency band resource, for example, a PDSCH indicated by a PDCCH. The polarization parameter may indicate a polarization direction of a beam, and the terminal may receive the paging message based on the polarization direction. It should be understood that the paging configuration may indicate a time-frequency resource location of the paging message and/or a polarization direction of a beam, and the terminal may determine, based on the paging configuration, a time-frequency resource location and a polarization direction in which the paging message is received.

In this embodiment of this application, the first network device may preconfigure a plurality of paging configurations for the terminal, for example, the N paging configurations, and set a corresponding effective condition for each paging configuration. When the terminal satisfies an effective condition, the terminal listens to the paging message based on a paging configuration corresponding to the effective condition. In this way, the time-frequency resource location for listening to the paging message does not need to be obtained from the system message, to avoid missing receiving of the paging message. It should be understood that the effective condition of the paging configuration may indicate the terminal to apply the paging configuration corresponding to the effective condition after the effective condition is satisfied. Applying the paging configuration may also be that the paging configuration takes effect, or enable the paging configuration.

For example, the first network device may determine, based on a relative location relationship between a beam and a terminal, a plurality of paging locations that need to be configured for the terminal. For example, if the first network device is a satellite base station, a moving track of the first network device is regular, that is, the first network device may clearly learn a location of the first network device in a time period. If the terminal is fixed, relative locations of the first network device and the terminal are accurate. Therefore, the first network device can accurately determine a time-frequency resource on which the paging message is sent to the terminal in a time period. The terminal listens to the paging message in a corresponding time period and on a corresponding time-frequency resource. It should be understood that the time period herein may be an effective time of the paging message, that is, an effective condition. However, if the terminal moves, accuracy of relative locations of the first network device and the terminal is low. In this case, to prevent the terminal from missing the paging message, the first network device may adaptively adjust, based on the relative locations of the first network device and the terminal, an effective time set for each paging configuration, for example, expand a range of the effective time. In this way, the terminal may listen to the paging message in advance, or listen to the paging message for a longer time, to avoid missing the paging message.

It should be understood that a condition for applying a paging configuration by the terminal may indicate the terminal to use a paging configuration corresponding to the condition after the terminal satisfies the condition, that is, the paging configuration takes effect. For ease of description, a condition that needs to be satisfied before the terminal applies the received paging configuration is referred to as an effective condition below. In this embodiment of this application, the effective condition may include one or more of the following conditions. The following separately describes these effective conditions.

Effective condition 1: a time, that is, an effective time (which may also be a time interval) corresponding to each paging configuration. When a time at which the terminal listens to the paging message corresponds to an effective time of a paging configuration, the terminal uses the paging configuration corresponding to the effective time. That is, the terminal listens to the paging message at a time-frequency resource location indicated by the paging configuration corresponding to the effective time. For example, the first paging configuration corresponds to a first effective time. When a time at which the terminal listens to the paging message is within the first effective time, the terminal listens to the paging message at a time-frequency resource location indicated by the first paging configuration.

In an example, Table 1 shows a correspondence between the N paging configurations and M effective conditions. In Table 1, an example in which the effective condition is an effective time and M=N is used, that is, one paging configuration corresponds to one effective condition is used.

**Table 1**

| Paging configuration | Paging configuration 1 | Paging configuration 2 | Paging configuration 3 | ... | Paging configuration N |
|---|---|---|---|---|---|
| Effective condition | Effective condition 1 | Effective condition 2 | Effective condition 3 | ... | Effective condition N |
| (effective time) | (T₀ to T₁) | (T₁ to T₂) | (T₂ to T₃) | | (T_{N-1} to T_{N}) |

Because the moving track of the first network device is regular. In this case, the first network device may clearly learn a location of the first network device in a time period. To be specific, the first network device may accurately determine a time-frequency resource on which a paging message is sent to the terminal in a time period. Therefore, the time may be used as an effective condition of the paging configuration. The first network device may send the paging message based on the configuration in Table 1, that is, the first network device sends the paging message in each effective time. When a beam covering the terminal is handed over from a source beam to a target beam, for example, the terminal determines that a frequency of listening to the paging message changes, the terminal may determine that the time-frequency resource location at which the first network device sends the paging message also changes. When the terminal is woken up, which configuration in Table 1 is used may be determined based on a time of listening to the paging message. That is, if the time at which the terminal listens to the paging message is within an effective time, the terminal listens to the paging message at a time-frequency resource location indicated by the paging configuration corresponding to the effective time. For example, if a time T at which the terminal needs to listen to the paging message is within an interval T₂ to T₃, the terminal listens to the paging message at a time-frequency resource location indicated by the paging configuration 3. Because the terminal may obtain, in advance, a time-frequency resource location for listening to the paging message in each time period, and does not need to obtain, from the system message, the time-frequency resource location for listening to the paging message, missed receiving of the paging message can be avoided.

Effective condition 2: a location label, where the location label may indicate a beam location. It should be understood that when a distance between the terminal and the first network device is short, there is a high probability that the terminal is in a coverage area of the first network device. In this embodiment of this application, a beam of the first network device is handed over with time, that is, a beam covering the terminal changes. In this case, a possibility that the terminal is in a coverage area of a beam may be determined based on a distance between the terminal and the beam of the first network device. The first network device sends the paging message based on a beam resource of the first network device. Therefore, a beam location of the first network device may be used as an effective condition of the paging configuration.

In an example, Table 2 shows a correspondence between the N paging configurations and M effective conditions. In Table 2, an example in which M=N and the effective condition is a location label is used, that is, one paging configuration corresponds to one effective condition is used.

**Table 2**

| Paging configuration | Paging configuration 1 | Paging configuration 2 | Paging configuration 3 | ... | Paging configuration N |
|---|---|---|---|---|---|
| Effective condition (location label) | Effective condition 1 (location label 1) | Effective condition 2 (location label 2) | Effective condition 3 (location label 3) | ... | Effective condition N (location label N) |

Herein, the location label indicates a location of the first network device, or it may be considered that the location label indicates a beam location. The first network device may send the paging message based on the configuration in Table 2. To be specific, if a location indicated by a location label is within a specific range, the first network device sends the paging message at a time-frequency resource location indicated by a paging configuration corresponding to the location label. The terminal applying a paging configuration may be that a distance between the terminal and a location indicated by a location label in a time period is within a specific range, and the terminal listens to the paging message at a time-frequency resource location indicated by the paging configuration corresponding to the location label. For example, if a distance between the terminal and a location indicated by a location label in a time period is less than or equal to a preset distance threshold, the terminal listens to the paging message at a time-frequency resource location indicated by a paging configuration corresponding to the location label. For example, the terminal may determine, based on N location labels of the N paging configurations, beam locations respectively corresponding to the N paging configurations. Further, the terminal may determine a beam location or beam locations closest to the N paging configurations, and listen to the paging message at a time-frequency resource location indicated by a paging configuration corresponding to a closest location label of the terminal.

A specific implementation of the location label is not limited in this embodiment of this application, provided that the terminal can calculate the beam location based on the location label. For example, the location label may be coordinates of a center point of a beam. In this case, the first network device may send, to the terminal, location labels respectively corresponding to a plurality of beams, and movement directions and speeds of the beams. The terminal may determine a beam location based on a location label, a movement direction, and a speed of a beam. For another example, the location label may indicate a location of each beam relative to the first network device. In this case, if a location and a moving track of the first network device in a time period are known, the terminal may alternatively determine a beam location in the time period based on the location label.

It should be noted that, if sizes of a plurality of beams of the first network device are similar, a beam close to the terminal is usually a beam that is covering or potentially covering the terminal. If sizes of a plurality of beams of the first network device differ greatly, a beam close to the terminal is not necessarily a beam that is covering or potentially covering the terminal. Therefore, if sizes of a plurality of beams of the first network device differ greatly, the first network device may further notify the terminal of more information, so that the terminal determines a beam that is most likely to serve the terminal, that is, a potential beam or a beam that is covering the terminal. For example, the first network device may further notify the terminal of an antenna pattern or a beam size of the first network device, to assist the terminal in determining a beam that is most likely to serve the terminal.

In satellite communication, a relative location between the terminal and the first network device is dominated by the network device. That is, if the terminal does not move, and the first network device moves regularly, accuracy of predicting a beam handover track of the first network device by the terminal is high. If the terminal moves, accuracy of predicting a beam handover track of the first network device by the terminal based on a motion rule of the first network device is low. To be specific, the terminal predicts, based on the motion rule of the first network device, that there is an offset between the beam handover track of the first network device and an actual beam handover track of the first network device. In this case, the N paging configurations configured by the first network device for the terminal based on a case in which the terminal does not move may be inaccurate in some time periods. Therefore, in this embodiment of this application, if a change amount of a location of the terminal within preset duration exceeds a preset threshold, the terminal may notify the first network device of the location of the terminal, so that the first network device reconfigures a paging configuration for the terminal based on the location of the terminal. For example, the terminal may send, to the first network device, location information indicating a location of the terminal, and the first network device may determine, based on the location information, at least one paging configuration that needs to be configured for the terminal, and send the at least one paging configuration to the terminal. For example, the first network device sends configuration information to the terminal, and the configuration information may indicate at least one paging configuration. Before listening to the paging message, the terminal may receive the configuration information, and then listen to the paging message based on the configuration information.

Effective condition 3: a frequency, that is, an effective frequency corresponding to each paging configuration. The frequency can be a frequency or a frequency combination. When the terminal monitors a frequency of a downlink synchronization signal corresponding to an effective frequency of a paging configuration, the terminal uses the paging configuration corresponding to the effective frequency. That is, the terminal listens to the paging message at a time-frequency resource location indicated by the paging configuration corresponding to the effective frequency. For example, the first paging configuration corresponds to a first effective frequency. When the terminal monitors the frequency of the downlink synchronization signal being located in a first frequency combination, the terminal listens to the paging message at a time-frequency resource location indicated by the first paging configuration.

In an example, Table 3 shows a correspondence between the N paging configurations and M effective conditions. In Table 1, an example in which M=N, the effective condition is an effective frequency, and the frequency is a frequency combination is used.

**Table 3**

| Paging configuration | Paging configuration 1 | Paging configuration 2 | Paging configuration 3 | ... | Paging configuration N |
|---|---|---|---|---|---|
| Effective condition | Effective condition 1 | Effective condition 2 | Effective condition 3 | ... | Effective condition N |
| (effective frequency) | (frequency combination 1) | (frequency combination 2) | (frequency combination 3) | | (frequency combination N) |

Usually, beam configuration information of the first network device is related to a service of the terminal. In a time period, even if the first network device uses different frequencies, for a same coverage area, resource configuration statuses of the coverage area are usually similar. In this case, it may be considered that in different time periods, beams of different colors are reflected in different frequencies. Therefore, the frequency may be used as an effective condition of the paging configuration.

The first network device may send the paging message based on the configuration in Table 3, that is, the first network device sends the paging message in each frequency combination. When a beam covering the terminal is handed over from a source beam to a target beam, for example, the terminal determines that a frequency of listening to the paging message changes, the terminal may determine that the time-frequency resource location at which the first network device sends the paging message also changes. When the terminal is woken up, which configuration in Table 3 is used may be determined based on the frequency of the monitored downlink synchronization signal. That is, if the frequency of the downlink synchronization signal monitored by the terminal is located at an effective frequency, the terminal listens to the paging message at a time-frequency resource location indicated by the paging configuration corresponding to the effective frequency. For example, if the frequency of the downlink synchronization signal monitored by the terminal is located in the frequency combination 2, the terminal listens to the paging message at a time-frequency resource location indicated by the paging configuration 2. Because the terminal may obtain, in advance, a time-frequency resource location for listening to the paging message in each frequency combination, and does not need to obtain, from the system message, the time-frequency resource location for listening to the paging message, missed receiving of the paging message can be avoided.

Effective condition 4: a polarization direction, that is, an effective polarization direction corresponding to each paging configuration. Similar to an effective frequency, the polarization direction herein may be a polarization direction combination. The polarization direction combination may include one polarization direction, or may include a plurality of polarization directions. When the terminal monitors a polarization direction of the downlink synchronization signal corresponding to an effective polarization direction of a paging configuration, the terminal uses the paging configuration corresponding to the effective polarization direction. That is, the terminal listens to the paging message at a time-frequency resource location indicated by the paging configuration corresponding to the effective polarization direction. For example, the first paging configuration corresponds to a first effective polarization direction. When the terminal monitors the polarization direction of the downlink synchronization signal being located in a first polarization direction combination, the terminal listens to the paging message at a time-frequency resource location indicated by the first paging configuration.

In an example, Table 4 shows a correspondence between the N paging configurations and M effective conditions. In Table 1, an example in which M=N, and the effective condition is an effective polarization direction is used.

**Table 4**

| Paging configuration | Paging configuration 1 | Paging configuration 2 | Paging configuration 3 | ... | Paging configuration N |
|---|---|---|---|---|---|
| Effective condition (effective polarization direction) | Effective condition 1 (polarization direction combination 1) | Effective condition 2 (polarization direction combination 2) | Effective condition 3 (polarization direction combination 3) | ... | Effective condition N (polarization direction combination N) |

Similar to the effective condition 3, even if the first network device uses different frequencies, for a same coverage area, resource configuration statuses of the coverage area are usually similar. In this case, it may be considered that in different time periods, beams of different colors are reflected in different polarization directions. Therefore, the polarization direction may be used as an effective condition of the paging configuration.

The first network device may send the paging message based on the configuration in Table 4, that is, the first network device sends the paging message in each polarization direction combination. When a beam covering the terminal is handed over from a source beam to a target beam, for example, the terminal determines that a frequency of listening to the paging message changes, the terminal may determine that the time-frequency resource location at which the first network device sends the paging message also changes. When the terminal is woken up, which configuration in Table 4 is used may be determined based on a polarization direction of the monitored downlink synchronization signal. That is, if the frequency of the downlink synchronization signal monitored by the terminal is located at an effective frequency, the terminal listens to the paging message at a time-frequency resource location indicated by the paging configuration corresponding to the effective frequency. For example, if the polarization direction of the downlink synchronization signal monitored by the terminal is located in the polarization direction combination 2, the terminal listens to the paging message at a time-frequency resource location indicated by the paging configuration 2. Because the terminal may obtain, in advance, a time-frequency resource location for listening to the paging message in each frequency combination, and does not need to obtain, from the system message, the time-frequency resource location for listening to the paging message, missed receiving of the paging message can be avoided.

The foregoing describes four possible effective conditions corresponding to the paging configuration. A type and a quantity of effective conditions corresponding to the paging configuration are not limited in this embodiment of this application. To be specific, the effective condition corresponding to the paging configuration may be one or more of the foregoing time, location label, frequency, and polarization direction.

The terminal may prestore the configuration (which may be collectively referred to as a configuration table) shown in Table 1, Table 2, Table 3, or Table 4. The terminal may determine a paging configuration used in a time period by looking up the table. In this way, the configuration table does not need to be obtained from the first network device. This reduces signaling overheads. It is considered that beams covering the terminal may be beams from different network devices, and paging configurations configured by different network devices may also be different, each network device may correspond to one configuration table. In this case, the terminal may prestore configuration tables corresponding to a plurality of network devices.

Certainly, the terminal stores the configuration tables corresponding to the plurality of network devices, and a requirement on storage space of the terminal is high. Therefore, in some embodiments, the terminal does not need to store the configuration table, and the terminal is handed over from a source network device (the network device currently serving the terminal) to a target network device, and may request the configuration table from the target network device, to save storage space of the terminal.

It should be understood that, for a terminal that uses a DRX mechanism, the terminal listens to a configuration only when the terminal is in an awake mode. If the first network device configures a large quantity of paging configurations, it is clear that some paging configurations are useless. This increases signaling overheads. Therefore, the first network device may determine, based on a wake-up time (a paging cycle) of the terminal, a quantity of paging configurations configured for the terminal, that is, determine a value of N. For example, if the paging cycle is long, a value of N is small. On the contrary, if the paging cycle is short, a value of N is large. This can prevent the first network device from configuring excessive paging configurations for the terminal, and reduce signaling overheads. Similarly, if an interval between two adjacent effective conditions, for example, two adjacent effective times, is long, but actually a beam handover time of the first network device is short, the terminal may not listen to the paging message in a time period. In this case, the first network device may determine an interval between two adjacent effective conditions based on a time interval of the beam handover. For example, the effective condition is an effective time. If a time interval of satellite beam handover is short, an interval between two adjacent effective time intervals is also short. If a time interval of satellite beam handover is long, an interval between two adjacent effective time intervals is also long. Further, the first network device may further determine, based on a moving speed, duration corresponding to each effective condition. If a movement rate of the first network device is high, a beam handover frequency of the first network device is high, and the duration corresponding to the effective condition should be short. For example, the effective condition is an effective time, and duration corresponding to the effective condition is duration corresponding to T_{N-1} to T_{N}. For example, the first network device is a low-orbit satellite, and duration corresponding to each effective time interval may be several seconds. That is, a granularity of duration corresponding to T_{N-1} to T_{N} is a second level. It should be noted that in this embodiment of this application, boundary values of effective conditions corresponding to two adjacent paging configurations may be the same or different. For example, in Table 1, T_{N-1} to T_{N} may be [T_{N-1}, T_{N}], or may be [T_{N-1}, T_{N}) or (T_{N-1}, T_{N}].

Further, based on different characteristics of a beam shape of the first network device, for example, a beam of the first network device being regular or irregular, duration that corresponds to each effective condition and that is determined by the first network device is also different.

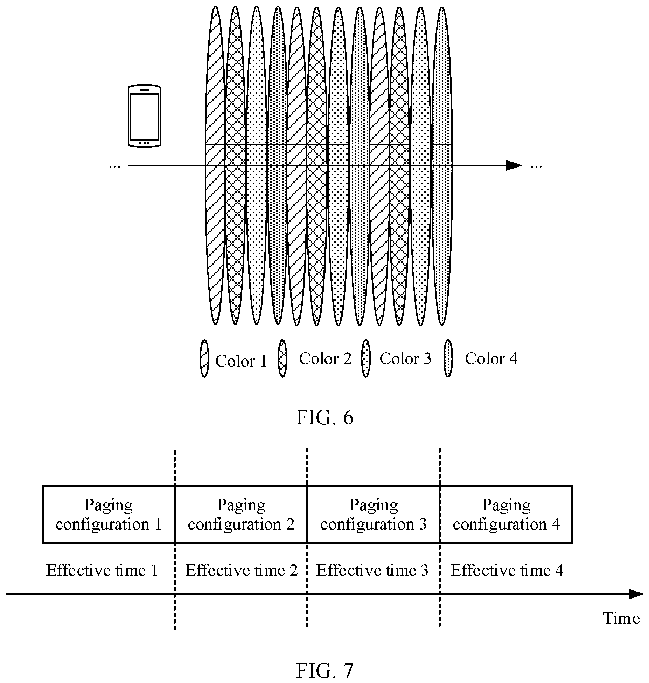

FIG. 6 shows a beam shape of a first network device. In FIG. 6, an example in which a four-color beam is included is used, and the first network device moves leftwards, that is, a terminal moves rightwards relative to the beam (that is, a direction of an arrow in FIG. 6 indicates a movement direction of the terminal relative to the first network device). It should be understood that if a beam shape of the first network device, that is, a satellite base station, is regular, for any terminal, it may be considered that an optimal beam covers the terminal in a same time period. In the time period, the first network device sends a paging message on the optimal beam, to reduce resource overheads for sending the paging message. Because the first network device sends the paging message in the optimal beam, that is, there may be a set of paging-related configuration information, that is, one paging configuration, for a time period. The terminal determines, based on the paging configuration, to listen to the paging message on one beam, and does not need to listen to a plurality of beams. This can reduce power consumption of the terminal.

In this case, effective conditions of paging configurations may be mutually exclusive. That is, any two adjacent effective conditions do not overlap (there is no intersection), that is, only one paging configuration takes effect in each time period. For example, it is assumed that the effective condition is an effective time, and any two adjacent effective times do not overlap, as shown in FIG. 7. In this way, the terminal does not need to use a plurality of paging configurations in one effective time interval, that is, listen to the paging configurations at different time-frequency resource locations, to reduce power consumption of the terminal as much as possible. For still another example, it is assumed that the effective condition is a location label. In this case, one paging configuration may correspond to one location label, and different paging configurations correspond to different location labels. It should be understood that a dashed line in FIG. 7 represents a boundary of an effective time.

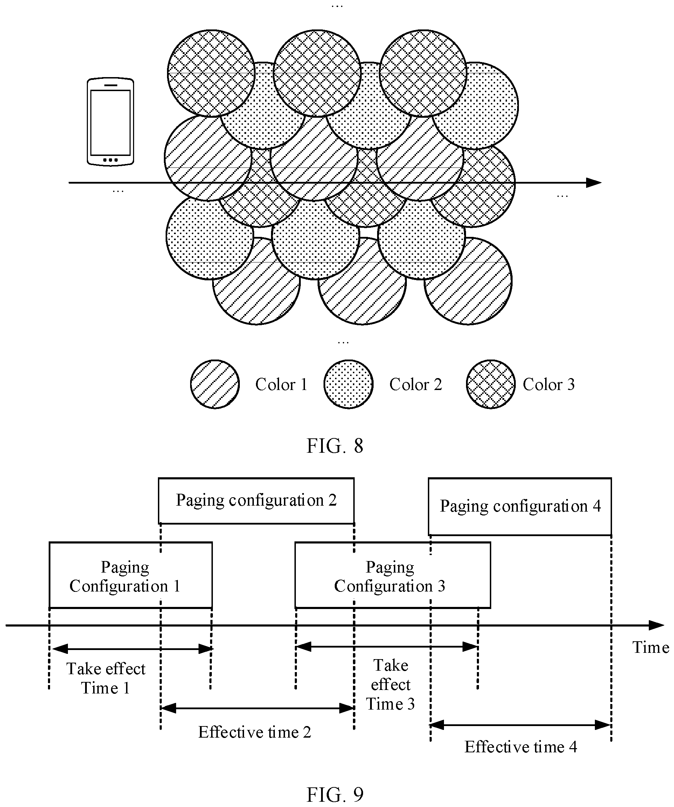

However, a beam of the first network device may be irregular, as shown in FIG. 8. In FIG. 8, an example in which a three-color beam is included is used, and the first network device moves leftwards, that is, a terminal moves rightwards relative to the beam (that is, a direction of an arrow in FIG. 8 indicates a movement direction of the terminal relative to the first network device). In this case, a plurality of beams may cover the terminal in a same time period. For example, the terminal may be covered by both a first beam (a beam of a color 1) and a second beam (a beam of a color 2). In this case, the first network device may send the paging message on all beams that potentially cover the terminal. To prevent the terminal from missing receiving of the paging message, the terminal may listen to the paging message on all the beams that potentially cover the terminal. In this case, two adjacent effective conditions may overlap, that is, there is an intersection between the two adjacent effective conditions. For example, if the effective condition is an effective time, two adjacent effective times overlap. For another example, the effective condition is a location label. One paging configuration may correspond to a plurality of location labels, and location labels corresponding to two adjacent paging configurations may overlap.

For ease of understanding, FIG. 9 is a schematic diagram of a paging configuration. In FIG. 9, an example in which the effective condition is an effective time is used, and a dashed line indicates a boundary of the effective time. It can be learned from FIG. 9 that, compared with FIG. 7, FIG. 9 essentially extends the effective time based on the effective time shown in FIG. 7. In this way, paging configurations in different beams may overlap in a time period. If a time T at which the terminal listens to the paging message is also within, for example, an effective time 2, the terminal may determine to listen to the paging message at a time-frequency resource location indicated by a paging configuration corresponding to the effective time 2. It should be understood that although the paging configuration corresponding to the effective time 2 includes a paging configuration 1 and a paging configuration 2, the terminal may further select to listen to the paging message at a time-frequency resource location indicated by the paging configuration 1, or listen to the paging message at a time-frequency resource location indicated by the paging configuration 2. For example, the terminal may select a paging configuration corresponding to a beam with strong signal strength. For example, if signal strength of a first beam (a beam of a color 1) is greater than that of a second beam (a beam of a color 2), the terminal may listen to the paging message at a time-frequency resource location indicated by a paging configuration corresponding to the first beam. For another example, if signal strength of the first beam (the beam of the color 1) is equal to that of the second beam (the beam of the color 2), the terminal may listen to the paging message at a time-frequency resource location indicated by the paging configuration corresponding to the first beam, and listen to the paging message at a time-frequency resource location indicated by a paging configuration corresponding to the second beam.

The foregoing uses an example in which one paging configuration corresponds to one paging condition, that is, N=M. If a beam of the first network device is irregular, there may be a plurality of beams covering the terminal in a same time period. In this case, the first network device sends the paging message on all beams that potentially cover the terminal. That is, in a time period, the first network device may configure paging messages of a plurality of beams. Similarly, if the first network device cannot accurately determine a location of the terminal, the first network device also sends the paging message on all the beams that potentially cover the terminal. That is, in a time period, the first network device may configure paging messages of a plurality of beams. In other words, it may be considered that a same effective condition may correspond to at least two paging configurations, that is, M is less than N.

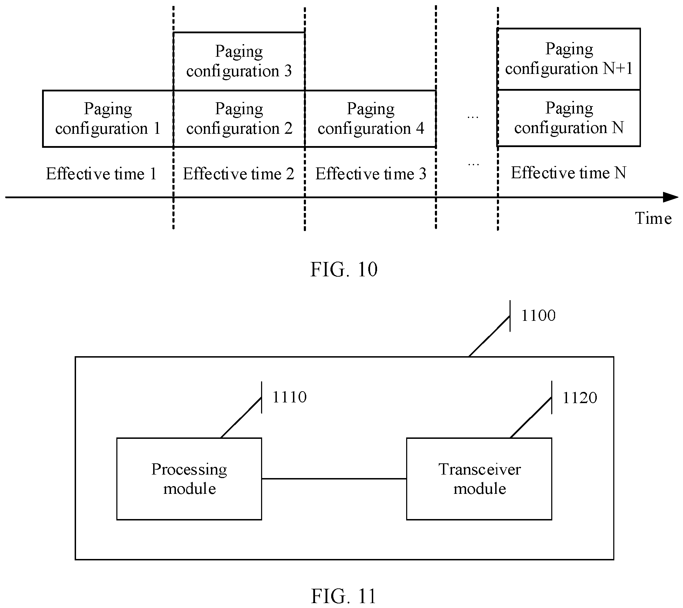

In an example, Table 5 is a table of a correspondence between N paging configurations and M effective conditions. In Table 5, an example in which the effective condition is an effective time is used, and one effective time may correspond to two paging configurations is used. Correspondingly, a schematic diagram of a paging configuration is shown in FIG. 10. It should be understood that a dashed line in FIG. 10 represents a boundary of an effective time.

**Table 5**

| Paging configuration | Paging configuration 1 | Paging configuration 2/Paging configuration 3 | Paging configuration 4 | ... | Paging configuration N/Paging configuration N+1 |
|---|---|---|---|---|---|
| Effective condition (effective time) | Effective condition 1 (T₀ to T₁) | Effective condition 2 (T₁ to T₂) | Effective condition 3 (T₂ to T₃) | ... | Effective condition N (T_{N-1} to T_{N}) |

The first network device may send the paging message based on the configuration in Table 5, that is, the first network device sends one or more paging messages in each effective time. When the terminal is woken up, which configuration in Table 5 is used may be determined based on a time of listening to the paging message. That is, if the time at which the terminal listens to the paging message is within an effective time, the terminal listens to the paging message at a time-frequency resource location indicated by the paging configuration corresponding to the effective time. For example, if a time T at which the terminal needs to listen to the paging message is within an interval T₁ to T₂, the terminal listens to the paging message at a time-frequency resource location indicated by the paging configuration 2 and/or the paging configuration 3. That is, the terminal may monitor paging configurations of two beams in a same time period. Further, the terminal may select to listen to the paging message at a time-frequency resource location indicated by the paging configuration 2, or listen to the paging message at a time-frequency resource location indicated by the paging configuration 3. For example, the terminal may select a paging configuration corresponding to a beam with strong signal strength. For example, if a paging configuration corresponding to a beam with strong signal strength is the paging configuration 2, the terminal listens to the paging message at a time-frequency resource location indicated by the paging configuration 2.

After determining the N paging configurations and the M effective conditions configured for the terminal, for example, any one or more configurations in Table 1 to Table 5, the first network device may notify the terminal of the N paging configurations and the M effective conditions. If there is a large amount of content in Table 1 to Table 5, it is clear that signaling overheads are large. To reduce signaling overheads, in this embodiment of this application, an effective condition corresponding to each paging configuration may be preconfigured. For example, an effective condition corresponding to each paging configuration may be predefined, or the first network device and the terminal may agree on a corresponding effective condition preconfigured for each paging configuration. In this case, the first network device only needs to send the N paging configurations to the terminal, to save signaling overheads.

For example, after determining the N paging configurations, the first network device may generate first configuration information, and send the first configuration information to the terminal. The first configuration information may be carried in one or more fields of existing signaling. This facilitates compatibility with the existing signaling. For example, the first configuration information may be carried in one or more of radio resource control (radio resources control, RRC) signaling, downlink control information (downlink control information, DCI) signaling, medium access control element (media access control element, MAC CE) signaling, or the like. The one or more fields may be a field defined in the RRC signaling, a field defined in the MAC CE signaling, or a field defined in the DCI signaling, or may be a newly defined RRC field, MAC CE field, or DCI field. This is not limited in this embodiment of this application. Certainly, the first configuration information may alternatively be carried in newly defined signaling. The first configuration information may be sent by using one piece of signaling, or may be sent by using a plurality of pieces of signaling. This is not limited in this embodiment of this application.

However, the first network device may update the N paging configurations previously configured for the terminal. For example, the first network device may reconfigure the N paging configurations for the terminal based on location information reported by the terminal. It is clear that the effective condition preconfigured for each paging configuration is no longer applicable. Therefore, in this embodiment of this application, the terminal may be notified of the M effective conditions corresponding to the N paging configurations. Certainly, even if the first network device does not update the N paging configurations previously configured for the terminal, the first network device may notify the terminal of the N paging configurations and the corresponding M effective conditions. That is, the first network device may send any one or more configurations in Table 1 to Table 5 to the terminal.

S503: The first network device sends second configuration information to the terminal, and the terminal receives the second configuration information, where the second configuration information includes M effective conditions.

Similar to the first configuration information, the second configuration information may be carried in one or more fields of an existing signaling. This facilitates compatibility with the existing signaling. For example, the second configuration information may be carried in one or more of RRC signaling, DCI signaling, MAC CE signaling, or the like. The one or more fields may be a field defined in the RRC signaling, a field defined in the MAC CE signaling, or a field defined in the DCI signaling, or may be a newly defined RRC field, MAC CE field, or DCI field. This is not limited in this embodiment of this application. Certainly, the second configuration information may alternatively be carried in newly defined signaling. The second configuration information may be sent by using one piece of signaling, or may be sent by using a plurality of pieces of signaling. This is not limited in this embodiment of this application.

It should be noted that a sequence in which the base station sends the N paging configurations and the M effective conditions is not limited in this embodiment of this application. For example, the first configuration information and the second configuration information may be carried in one piece of RRC signaling, that is, the N paging configurations and the M effective conditions may be simultaneously sent to the terminal. For another example, the first configuration information and the second configuration information may be carried in a plurality of pieces of RRC signaling. For example, the N paging configurations may be carried in one piece of signaling, and the M effective conditions may be carried in another piece of signaling. Alternatively, the N paging configurations are carried in a plurality of pieces of RRC signaling, and the M effective conditions may be carried in one or more pieces of RRC signaling. Alternatively, the N paging configurations are carried in one piece of RRC signaling, and the M effective conditions are carried in one or more pieces of RRC signaling.

It should be understood that the base station configures the paging configuration for the terminal. If the base station is deployed on the first network device, and the base station sends the first configuration information to the terminal, it may be considered that the first network device directly sends the first configuration information to the terminal. If the base station is a terrestrial base station, it may be considered that the base station forwards the first configuration information to the terminal by using a network device such as the first network device or the second network device. This is not limited in this embodiment of this application. Similarly, the first network device may directly send the second configuration information to the terminal, or another network device may forward the second configuration information to the terminal. This is not limited in this embodiment of this application.

In addition, S503 is mandatory. That is, S503 is optional, and is shown by a dashed line in FIG. 5. In addition, it should be understood that if S503 is performed, S503 is performed before S502.

For different terminals in a beam coverage area of the first network device, the N paging configurations are the same. However, the M effective conditions may vary with different terminals. To reduce signaling overheads, the first network device may configure the N paging configurations based on a cell granularity. That is, the N paging configurations may be bound to a beam, and the M effective conditions are configured based on a terminal granularity. In this way, the first network device needs to configure only one set of N paging configurations for each cell, and the set of N paging configurations is applicable to all terminals in the cell. Compared with separately configuring N paging configurations for the terminals in the cell, this manner can reduce signaling overheads.

In an example, the first configuration information may include identifiers of the N paging configurations, to indicate beams bound to the N paging configurations. After accessing a network, the terminal may determine corresponding N paging configurations based on the identifiers. When an effective condition is satisfied, a paging configuration corresponding to the effective condition is used based on the M effective conditions configured by the first network device for the terminal.

It should be understood that, in addition to configuring the paging message for the terminal, the first network device further configures the system message for the terminal. Specifically, the system message may be configured based on a logical entity of a beam of the first network device. For example, if a beam is a cell, beams of a same color may belong to a same cell. For example, in FIG. 6, beams of four colors are equivalent to four cells. To simplify deployment, partial configuration information of the four cells, for example, a cell ID, an initial BWP-related configuration, a PCCH-Config configuration, common search space (common search space, CSS) that carries a PDCCH scrambled by a P-RNTI, and a system time, may be configured to be the same. It should be understood that there is a difference between remaining configuration information of the four cells.

Because a moving track of the terminal in the satellite beam is regular, the first network device may notify the terminal in advance of same partial configurations of the four cells, for example, a frequency, a cell ID, an initial BWP, a PCCH-Config, and a CSS configuration that carries a PDCCH scrambled by a P-RNTI, and notify a difference part between each cell and another cell. This can reduce signaling overheads. For example, the first network device may send, for example, all configuration information of a first cell in the four cells. For the other three cells of the four cells, the first network device may separately configure configuration information that is of the three cells and that is different from that of the first cell. The terminal may determine all configuration information of the three cells based on all the configuration information of the first cell and the configuration information that is of the three cells and that is different from that of the first cell. Compared with separately configuring all configuration information for the four cells, this manner can reduce signaling overheads.

In addition, the first network device may notify the terminal of an effective condition of each configuration, for example, an effective time. When the terminal determines that the beam is switched, for example, the beam is switched from a beam of a color 1 to a beam of a color 2, the terminal may determine, based on the effective time, a configuration corresponding to the beam of the color 2. For example, the terminal determines, based on PCCH-Config information of the beam of the color 2, a time-frequency resource on which the paging message is listened to. When the paging message needs to be listened to, the terminal performs synchronization and demodulation on a signal of the beam of the color 2 based on a frequency corresponding to the beam of the color 2, an initial BWP configuration, and a CSS configuration, to determine a time-frequency resource of the CSS, and then searches the CSS for a PDCCH scrambled by a P-RNTI. If a PDCCH scrambled by the P-RNTI is found, DCI in the PDCCH is read. Then, content of the paging message is obtained on the PDSCH indicated by the DCI. In a solution, when a beam is switched from a beam of a color 1 to a beam of a color 2, a terminal needs to search for a plurality of potential frequencies (to perform cell reselection), read and parse a system message, to obtain an initial BWP configuration, a CSS configuration, a PCCH-Config configuration, and the like, obtain a time-frequency resource location of the paging message, and listen to the paging message at the determined time-frequency resource location. Compared with the solution, the terminal can avoid missing receiving of the paging message in this embodiment of this application.

It should be noted that the foregoing uses only an example in which the first network device configures the paging configuration. The NTN communication method provided in this embodiment of this application may also be applicable to a cell measurement configuration, an access configuration, and a system message listening configuration. It should be understood that, when no conflict occurs, the paging configuration in this embodiment of this application may be replaced with a cell measurement configuration, an access configuration, or a system message listening configuration. In addition, when no conflict occurs, an effective condition of the paging configuration in this embodiment of this application may be used as an effective condition of a cell measurement configuration, an access configuration, or a system message listening configuration.

For example, for cell measurement, a satellite beam on which the terminal needs to perform cell measurement changes regularly with time. Therefore, the first network device may preconfigure, for the terminal, cell frequency information and other cell measurement assistance information that may appear at different times, to reduce a frequency range that the terminal needs to measure, and improve a speed of obtaining a measurement pilot.

In an example, the first configuration information may indicate N cell measurement configurations configured for the terminal, and each cell measurement configuration includes a configuration parameter in time domain and a configuration parameter in frequency domain. For example, a cell measurement configuration in the N cell measurement configurations may include a cell frequency set, a time-frequency resource location corresponding to the cell frequency set, and a cell ID set corresponding to the cell frequency set.

In some embodiments, the cell measurement configuration may further include a maximum frequency offset corresponding to the cell frequency set and a Doppler pre-compensation value of a satellite to a beam. The terminal may narrow a to-be-detected frequency range based on the maximum frequency offset corresponding to the cell frequency set and the Doppler pre-compensation value of the satellite to the beam, and quickly obtain a frequency offset value of a received pilot signal. This avoids blind detection overheads.

In addition, the cell measurement configuration further includes a location of a pilot signal in time domain, for example, may include a time domain resource pattern of a synchronization signal block in a target cell and a difference between a system time of the current cell and a system time of the target cell. The terminal may determine a most possible time window of the pilot signal based on the location of the pilot signal in time domain, to perform scanning in the time window, and reduce scanning overheads.

Certainly, the cell measurement configuration further includes other configuration information necessary for cell measurement, such as a polarization mode, a priority, a synchronization sequence configuration, synchronization signal selection information, a pilot sequence, scrambling code selection information, and location information in a satellite beam. Details are not enumerated herein.

The first network device may configure M effective conditions corresponding to the N cell measurement configurations, for example, one or more of the foregoing four effective conditions. If the terminal satisfies an effective condition, the terminal measures the cell frequency set at a time-frequency resource location that corresponds to the cell frequency set and that is indicated by a cell measurement configuration corresponding to the effective condition. For example, if the terminal satisfies a first effective condition, the terminal measures the cell frequency set at a time-frequency resource location that corresponds to the cell frequency set and that is indicated by a first cell measurement configuration in the N cell measurement configurations. The first effective condition corresponds to the first cell measurement configuration.

For another example, for an access configuration, the first configuration information may indicate N access configurations configured for the terminal, and each of the N access configurations includes a PRACH configuration and a time-frequency resource location corresponding to an RO. If the terminal satisfies a first effective condition, the terminal performs random access at the time-frequency resource location corresponding to the RO by using a PRACH configuration indicated by a first access configuration in the N access configurations. The first effective condition corresponds to the first access configuration.

For another example, for a configuration for listening to a system message, the first configuration information may indicate N listening configurations configured for the terminal, and each of the N listening configurations includes a time-frequency resource location for listening to the system message. If the terminal satisfies a first effective condition, the terminal listens to the system message on a time-frequency resource indicated by a first listening configuration in the N listening configurations. The first effective condition corresponds to the first listening configuration.

An embodiment of this application provides an NTN communication method. In the method, a satellite base station may configure a paging configuration in a time period for a terminal in advance, and when the terminal satisfies a specific condition, the terminal uses the paging configuration. In this way, the paging configuration does not need to be obtained from the received system message, to avoid missing receiving of the paging message sent by the satellite base station.

The foregoing embodiments of this application describe the method provided in embodiments of this application from a perspective of interaction between the terminal and the network device. To implement functions in the foregoing methods provided in embodiments of this application, the terminal and the network device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

FIG. 11 is a schematic block diagram of a communication apparatus 1100 according to an embodiment of this application. The communication apparatus 1100 may correspondingly implement functions or steps implemented by the terminal or the first network device in the foregoing method embodiments. The communication apparatus may include a processing module 1110 and a transceiver module 1120. Optionally, the communication apparatus may further include a storage unit. The storage unit may be configured to store instructions (code or a program) and/or data. The processing module 1110 and the transceiver module 1120 may be coupled to the storage unit. For example, the processing unit 1110 may read instructions (code or a program) and/or data in the storage unit, to implement a corresponding method. The foregoing units may be disposed independently, or may be partially or completely integrated.

In some possible implementations, the communication apparatus 1100 can correspondingly implement behavior and functions of the first network device in the foregoing method embodiment. For example, the communication apparatus 1100 may be a first network device, or may be a component (for example, a chip or a circuit) applied to the first network device. The transceiver module 1120 may be configured to perform all receiving or sending operations performed by the first network device in the embodiment shown in FIG. 5, for example, S501 to S503 in embodiment shown in FIG. 5, and/or configured to support another process of the technology described in this specification. The processing module 1110 is configured to perform all operations, other than receiving or sending operations, performed by the first network device in embodiment shown in FIG. 5, for example, generate N paging configurations and/or M effective conditions; and/or configured to support another process of the technology described in this specification.

In an example, the processing module 1110 is configured to generate first configuration information. The first configuration information indicates N paging configurations configured for a terminal. Each of the N paging configurations includes a time-frequency resource location of a paging message. N is an integer greater than or equal to 1. The transceiver module 1120 is configured to: send the first configuration information, and if the processing module 1110 determines that a first effective condition is satisfied, send the paging message at a time-frequency resource location indicated by a first paging configuration in the N paging configurations. The first effective condition corresponds to the first paging configuration.

In an example, the processing module 1110 is configured to generate first configuration information. The first configuration information indicates N cell measurement configurations configured for a terminal. One of the N cell measurement configurations includes a cell frequency set, a time-frequency resource location corresponding to the cell frequency set, and a cell ID set corresponding to the cell frequency set. N is an integer greater than or equal to 1. The transceiver module 1120 is configured to: send the first configuration information, and if the processing module 1110 determines that a first effective condition is satisfied, send a measurement signal of the cell ID set at a time-frequency resource location that corresponds to the cell frequency set and that is indicated by a first cell measurement configuration in the N cell measurement configurations. The first effective condition corresponds to the first cell measurement configuration.

In an example, the processing module 1110 is configured to generate first configuration information. The first configuration information indicates N access configurations configured for a terminal. Each of the N access configurations includes a PRACH configuration and a time-frequency resource location corresponding to a RO. N is an integer greater than or equal to 1. The transceiver module 1120 is configured to: send the first configuration information, and if the processing module 1110 determines that a first effective condition is satisfied, send a PRACH configuration indicated by a first access configuration in the N access configurations. The first effective condition corresponds to the first access configuration.

In an example, the processing module 1110 is configured to generate first configuration information. The first configuration information indicates N listening configurations configured for a terminal. Each of the N listening configurations includes a time-frequency resource location for listening to a system message. N is an integer greater than or equal to 1. The transceiver module 1120 is configured to: send the first configuration information, and if the processing module 1110 determines that a first effective condition is satisfied, send the system message on a time-frequency resource indicated by a first listening configuration in the N listening configurations. The first effective condition corresponds to the first listening configuration.

In an optional implementation, the transceiver module 1120 is further configured to send second configuration information. The second configuration information includes M effective conditions. M is an integer greater than or equal to 1, and M is less than or equal to N.

In an optional implementation, the first configuration information indicates N paging configurations, and the first effective condition includes one or more of a first time, a first location label, a first frequency, and a first polarization direction that correspond to a first paging configuration; or
the first configuration information indicates N cell measurement configurations, and the first effective condition includes one or more of a first time, a first location label, a first frequency, and a first polarization direction that correspond to a first cell measurement configuration; or
the first configuration information indicates N access configurations, and the first effective condition includes one or more of a first time, a first location label, and a first polarization direction that correspond to a first access configuration; or
the first configuration information indicates N listening configurations, and the first effective condition includes one or more of a first time, a first location label, a first frequency, and a first polarization direction that correspond to a first listening configuration.

In an optional implementation, the N paging configurations are in a one-to-one correspondence with the M effective conditions. Alternatively, N is greater than M, and at least one of the M effective conditions corresponds to at least two paging configurations.

In an optional implementation, the effective condition includes a time. Two adjacent times do not overlap, or there is an intersection between two adjacent times.

In an optional implementation, the effective condition is a location label, and the transceiver module 1120 is further configured to: receive location information, and send third configuration information. The location information indicates a location of the terminal. The third configuration information indicates at least one paging configuration. The at least one paging configuration is determined based on the location information.

It should be understood that the processing module 1110 in this embodiment of this application may be implemented by a processor or a processor-related circuit component, and the transceiver module 1120 may be implemented by a transceiver, a transceiver-related circuit component, or a communication interface.

In some possible implementations, the communication apparatus 1100 can correspondingly implement behavior and functions of the terminal in the foregoing method embodiments. For example, the communication apparatus 1100 may be a terminal, or may be a component (for example, a chip or a circuit) applied to a terminal. The transceiver module 1120 may be configured to perform all receiving or sending operations performed by the terminal in the embodiment shown in FIG. 5, for example, S501 to S503 in embodiment shown in FIG. 5, and/or configured to support another process of the technology described in this specification. The processing module 1110 is configured to perform all operations, other than receiving and sending operations, performed by the terminal in the embodiment shown in FIG. 5; and/or configured to support another process of the technology described in this specification.

In an example, the transceiver module 1120 is configured to receive first configuration information. The first configuration information indicates N paging configurations configured for the communication apparatus 1100. Each of the N paging configurations includes a time-frequency resource location of a paging message. N is an integer greater than or equal to 1. If the processing module 1110 determines that a first effective condition is satisfied, the transceiver module 1120 is further configured to listen to the paging message at a time-frequency resource location indicated by a first paging configuration in the N paging configurations. The first effective condition corresponds to the first paging configuration.

In an example, the transceiver module 1120 is configured to: receive first configuration information, where the first configuration information indicates N cell measurement configurations configured for the communication apparatus 1100, one of the N cell measurement configurations includes a cell frequency set, a time-frequency resource location corresponding to the cell frequency set, and a cell ID set corresponding to the cell frequency set, and N is an integer greater than or equal to 1; and if the processing module 1110 determines that a first effective condition is satisfied, measure the cell frequency set at a time-frequency resource location that corresponds to the cell frequency set and that is indicated by a first cell measurement configuration in the N cell measurement configurations, where the first effective condition corresponds to the first cell measurement configuration.

In an example, the transceiver module 1120 is configured to: receive first configuration information, where the first configuration information indicates N access configurations configured for the communication apparatus 1100, each of the N access configurations includes a PRACH configuration and a time-frequency resource location corresponding to an RO, and N is an integer greater than or equal to 1; and if the processing module 1110 determines that a first effective condition is satisfied, perform random access at the time-frequency resource location corresponding to the RO by using a PRACH configuration indicated by a first access configuration in the N access configurations, where the first effective condition corresponds to the first access configuration.

In an example, the transceiver module 1120 is configured to receive first configuration information. The first configuration information indicates N listening configurations configured for the communication apparatus 1100. Each of the N listening configurations includes a time-frequency resource location for listening to a system message. N is an integer greater than or equal to 1. If the processing module 1110 determines that a first effective condition is satisfied, the transceiver module 1120 is further configured to listen to the system message on a time-frequency resource indicated by a first listening configuration in the N listening configurations. The first effective condition corresponds to the first listening configuration.

In an optional implementation, the transceiver module 1120 is further configured to receive second configuration information. The second configuration information includes M effective conditions. M is an integer greater than or equal to 1, and M is less than or equal to N.

In an optional implementation, the first configuration information indicates N paging configurations, and the first effective condition includes one or more of a first time, a first location label, a first frequency, and a first polarization direction that correspond to a first paging configuration; or
the first configuration information indicates N cell measurement configurations, and the first effective condition includes one or more of a first time, a first location label, and a first polarization direction that correspond to a first cell measurement configuration; or
the first configuration information indicates N access configurations, and the first effective condition includes one or more of a first time, a first location label, a first frequency, and a first polarization direction that correspond to a first access configuration; or
the first configuration information indicates N listening configurations, and the first effective condition includes one or more of a first time, a first location label, a first frequency, and a first polarization direction that correspond to a first listening configuration.

In an optional implementation, the N paging configurations are in a one-to-one correspondence with the M effective conditions. Alternatively, N is greater than M, and at least one of the M effective conditions corresponds to at least two paging configurations.

In an optional implementation, the effective condition includes a time. Two adjacent times do not overlap, or there is an intersection between two adjacent times.

In an optional implementation, the effective condition is a location label, and the transceiver module 1120 is further configured to: send location information when a change amount of a location within preset duration exceeds a preset threshold, and receive third configuration information before listening to the paging message. The location information indicates a location of the communication apparatus 1100. The third configuration information indicates at least one paging configuration. The at least one paging configuration is determined based on the location information.

It should be understood that the processing module 1110 in this embodiment of this application may be implemented by a processor or a processor-related circuit component, and the transceiver module 1120 may be implemented by a transceiver, a transceiver-related circuit component, or a communication interface.

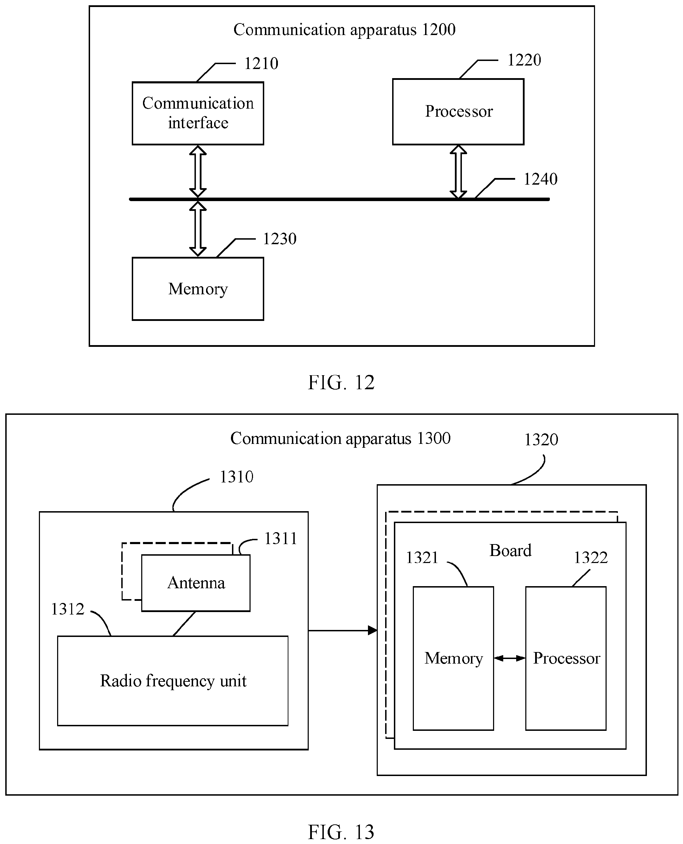

FIG. 12 is a communication apparatus 1200 according to an embodiment of this application. The communication apparatus 1200 may be a terminal, and can implement a function of the terminal in the method provided in embodiments of this application. Alternatively, the communication apparatus 1200 may be a network device, and can implement a function of the first network device in the method provided in embodiments of this application. Alternatively, the communication apparatus 1200 may be an apparatus that can support the terminal in implementing a corresponding function in the method provided in embodiments of this application, or an apparatus that can support the network device to implement a corresponding function in the method provided in embodiments of this application. The communication apparatus 1200 may be a chip or a chip system. In this embodiment of this application, the chip system may include a chip, or may include a chip and another discrete component.

In hardware implementation, the transceiver module 1120 may be a transceiver, and the transceiver is integrated into the communication apparatus 1200 to form a communication interface 1210.

The communication apparatus 1200 includes at least one processor 1220, configured to implement or support the communication apparatus 1200 in implementing a function of the network device or the terminal in the method provided in embodiments of this application. For details, refer to detailed descriptions in the method example. Details are not described herein again.

The communication apparatus 1200 may further include at least one memory 1230, configured to store program instructions and/or data. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may operate in collaboration with the memory 1230. The processor 1220 may execute the program instructions and/or the data stored in the memory 1230, so that the communication apparatus 1200 implements a corresponding method. At least one of the at least one memory may be included in the processor 1220.

The communication apparatus 1200 may further include a communication interface 1210, configured to communicate with another device by using a transmission medium, so that an apparatus used in the communication apparatus 1200 may communicate with the another device. For example, when the communication apparatus is a terminal, the another device is a network device. Alternatively, when the communication apparatus is a network device, the another device is a terminal. The processor 1220 may send and receive data through the communication interface 1210. The communication interface 1210 may be specifically a transceiver

In this embodiment of this application, a specific connection medium between the communication interface 1210, the processor 1220, and the memory 1230 is not limited. In this embodiment of this application, the memory 1230, the processor 1220, and the communication interface 1210 are connected through a bus 1240 in FIG. 12. The bus is represented by using a bold line in FIG. 12. The foregoing is merely an example for description. A connection manner of other components is not limited thereto. The bus may be classified into an address bus, a data bus, a control bus, and the like. For ease of representation, only bold line is for representing the bus in FIG. 12, but this does not mean that there is only one bus or only one type of bus.

In this embodiment of this application, the processor 1220 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 1230 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in a terminal, or another combined component, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

FIG. 13 is a schematic diagram of a simplified structure of a communication apparatus. For ease of understanding and illustration, in FIG. 13, an example in which the communication apparatus is a base station is used. The base station may be applied to the system shown in FIG. 3 or FIG. 4, may be the first network device in FIG. 3 or FIG. 4, and perform a function of the first network device in the foregoing method embodiment.

A communication apparatus 1300 may include a transceiver 1310, a memory 1321, and a processor 1322. The transceiver 1310 may be used by the communication apparatus to perform communication, for example, configured to send or receive the indication information. The memory 1321 is coupled to the processor 1322, and may be configured to store a program and data that are necessary for implementing functions of the communication apparatus 1300. The processor 1322 is configured to support the communication apparatus 1300 in performing a corresponding function in the foregoing method, and the function may be implemented by invoking a program stored in the memory 1321.

Specifically, the transceiver 1310 may be a wireless transceiver, and may be configured to support the communication apparatus 1300 in receiving and sending signaling and/or data over a wireless air interface. The transceiver 1310 may alternatively be referred to as a transceiver unit or a communication unit. The transceiver 1310 may include one or more radio frequency units 1312 and one or more antennas 1311. The radio frequency unit, for example, a remote radio unit (remote radio unit, RRU) or an active antenna unit (active antenna unit, AAU), may be specifically configured to transmit a radio frequency signal and convert a radio frequency signal and a baseband signal. The one or more antennas may be specifically configured to radiate and receive a radio frequency signal. Optionally, the transceiver 1310 may include only the foregoing radio frequency unit. In this case, the communication apparatus 1300 may include the transceiver 1310, the memory 1321, the processor 1322, and an antenna.

The memory 1321 and the processor 1322 may be integrated or may be independent of each other. As shown in FIG. 13, the memory 1321 and the processor 1322 may be integrated into a control unit 1320 of the communication apparatus 1300. For example, the control unit 1320 may include a baseband unit (baseband unit, BBU) of an LTE base station, and the baseband unit may also be referred to as a digital unit (digital unit, DU). Alternatively, the control unit 1320 may include a distributed unit (distribute unit, DU) and/or a centralized unit (centralized unit, CU) in a base station in 5G and a future radio access technology. The control unit 1320 may include one or more antenna panels. A plurality of antenna panels may jointly support a radio access network (for example, an LTE network) of a single access standard, or a plurality of antenna panels may separately support radio access networks (for example, an LTE network, a 5G network, or another network) of different access standards. The memory 1321 and the processor 1322 may serve one or more antenna panels. That is, the memory 1321 and the processor 1322 may be separately disposed on each antenna panel. Alternatively, a plurality of antenna panels may share a same memory 1321 and a same processor 1322. In addition, a necessary circuit may be disposed on each antenna panel. For example, the circuit may be configured to implement coupling between the memory 1321 and the processor 1322. The transceiver 1310, the processor 1322, and the memory 1321 may be connected to each other through a bus (bus) structure and/or another connection medium.

Based on the structure shown in FIG. 13, when the communication apparatus 1300 needs to send data, the processor 1322 may perform baseband processing on the to-be-sent data, and then output a baseband signal to a radio frequency unit. After performing radio frequency processing on the baseband signal, the radio frequency unit sends the radio frequency signal in a form of an electromagnetic wave through an antenna. When data is sent to the communication apparatus 1300, the radio frequency unit receives a radio frequency signal through the antenna, converts the radio frequency signal into a baseband signal, and outputs the baseband signal to the processor 1322. The processor 1322 converts the baseband signal into data and processes the data.

Based on the structure shown in FIG. 13, the transceiver 1310 may be configured to perform the foregoing steps performed by the transceiver module 1120; and/or the processor 1322 may be configured to invoke instructions in the memory 1321 to perform the foregoing steps performed by a processing module 1110.

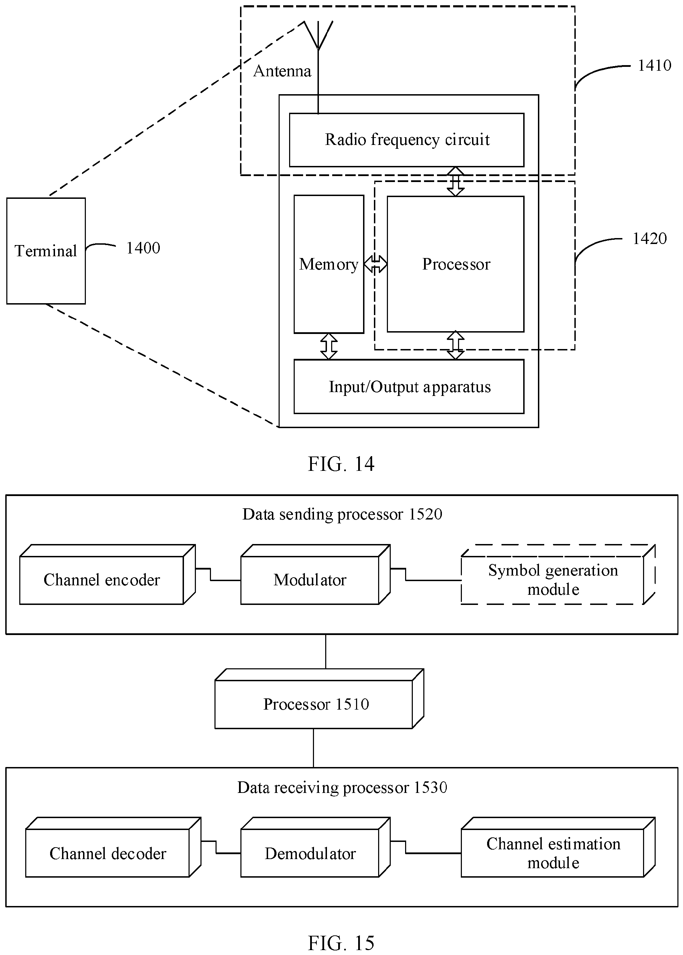

FIG. 14 is a schematic diagram of a simplified structure of a terminal. For ease of understanding and illustration, in FIG. 14, an example in which the terminal is a mobile phone is used. As shown in FIG. 14, the terminal includes a processor, a memory, a radio frequency circuit, an antenna, and an input/output apparatus. The processor is mainly configured to: process a communication protocol and communication data, control an on-board unit, execute a software program, and process data of the software program. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that some types of devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 14 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the apparatus, and the processor having a processing function may be considered as a processing unit of the apparatus. As shown in FIG. 14, the apparatus includes a transceiver unit 1410 and a processing unit 1420. The transceiver unit 1410 may also be referred to as a transceiver, a transceiver machine, a transceiver apparatus, or the like. The processing unit 1420 may also be referred to as a processor, a processing board, a processing module, a processing apparatus, or the like. Optionally, a component that is in the transceiver unit 1410 and that is configured to implement a receiving function may be considered as a receiving unit, and a component that is in the transceiver unit 1410 and that is configured to implement a sending function may be considered as a sending unit. In other words, the transceiver unit 1410 includes the receiving unit and the sending unit. The transceiver unit 1410 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1410 is configured to perform a sending operation and a receiving operation on the terminal side in the foregoing method embodiments, and the processing unit 1420 is configured to perform operations other than the sending and receiving operations of the terminal in the foregoing method embodiments.

For example, in an implementation, the transceiver unit 1410 may be configured to perform S501 to S503 in embodiment shown in FIG. 5, and/or configured to support another process of the technology described in this specification. The processing unit 1420 is configured to perform steps other than sending and receiving in embodiment shown in FIG. 5, and/or configured to support another process of the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

In this embodiment, refer to the apparatus shown in FIG. 15. In an example, the apparatus can implement a function similar to that of the processing module 1110 in FIG. 11. In FIG. 15, the apparatus includes a processor 1510, a data sending processor 1520, and a data receiving processor 1530. The processing module 1110 in the foregoing embodiment may be the processor 1510 in FIG. 15, and completes a corresponding function. The processing module 1110 in the foregoing embodiment may be the data sending processor 1520 and/or the data receiving processor 1530 in FIG. 15. Although a channel encoder and a channel decoder are shown in FIG. 15, it may be understood that the modules are merely examples and do not constitute any limitation on this embodiment.

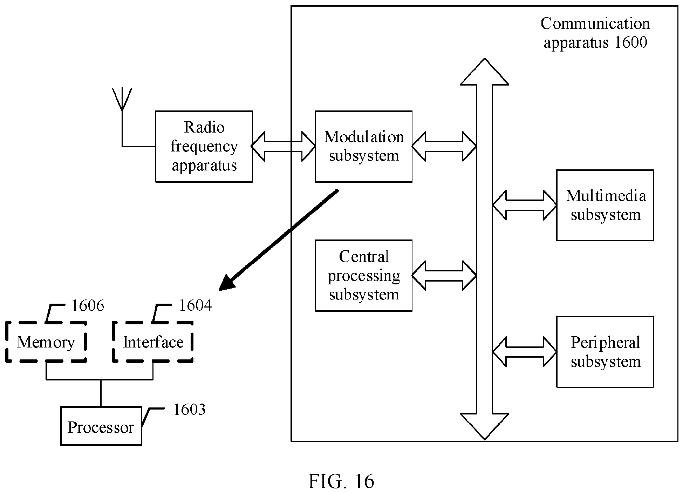

FIG. 16 shows another form of this embodiment. A communication apparatus 1600 includes modules such as a modulation subsystem, a central processing subsystem, and a peripheral subsystem. The communication apparatus in this embodiment may be used as the modulation subsystem. Specifically, the modulation subsystem may include a processor 1603 and an interface 1604. The processor 1603 completes a function of the processing module 1110, and the interface 1604 completes a function of the transceiver module 1120. In another variation, the modulation subsystem includes a memory 1606, a processor 1603, and a program that is stored in the memory 1606 and that can run on the processor 1603. When executing the program, the processor 1603 implements the method of the terminal in the foregoing method embodiments. It should be noted that the memory 1606 may be non-volatile, or may be volatile. The memory 1606 may be located inside the modulation subsystem, or may be located in the communication apparatus 1600, provided that the memory 1606 can be connected to the processor 1603.

An embodiment of this application further provides a communication system. Specifically, the communication system includes a network device and a terminal, or may include a plurality of network devices and a plurality of terminals. For example, the communication system includes a network device and a terminal that are configured to implement related functions in the embodiment in FIG. 5.

The network device is separately configured to implement functions related to the network device part in the embodiment shown in FIG. 5. The terminal is configured to implement functions related to the terminal in the embodiment shown in FIG. 5. For details, refer to the related descriptions in the method embodiment. Details are not described herein again.

An embodiment of this application further provides a computer-readable storage medium, including instructions. When the instructions are run on a computer, the computer is enabled to perform the method performed by the network device in the embodiment shown in FIG. 5, or when the instructions are run on a computer, the computer is enabled to perform the method performed by the terminal in the embodiment shown in FIG. 5.

An embodiment of this application further provides a computer program product, including instructions. When the instructions are run on a computer, the computer is enabled to perform the method performed by the network device in the embodiment shown in FIG. 5, or when the instructions are run on a computer, the computer is enabled to perform the method performed by the terminal in the embodiment shown in FIG. 5.

An embodiment of this application provides a chip system. The chip system includes a processor and may further include a memory, to implement functions of the network device or the terminal in the method, or to implement functions of the network device and the terminal in the method. The chip system may include a chip, or may include a chip and another discrete component.

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A non-terrestrial network NTN communication method, comprising:
receiving, by a terminal, first configuration information, wherein the first configuration information indicates N paging configurations configured for the terminal, each of the N paging configurations comprises a time-frequency resource location of a paging message, and N is an integer greater than or equal to 1; and
if the terminal satisfies a first effective condition, listening to the paging message at a time-frequency resource location indicated by a first paging configuration in the N paging configurations, wherein the first effective condition corresponds to the first paging configuration.

2. A non-terrestrial network NTN communication method, comprising:
receiving, by a terminal, first configuration information, wherein the first configuration information indicates N cell measurement configurations configured for the terminal, one of the N cell measurement configurations comprises a cell frequency set, a time-frequency resource location corresponding to the cell frequency set, and a cell ID set corresponding to the cell frequency set, and N is an integer greater than or equal to 1; and
if the terminal satisfies a first effective condition, measuring the cell frequency set at a time-frequency resource location that corresponds to the cell frequency set and that is indicated by a first cell measurement configuration in the N cell measurement configurations, wherein the first effective condition corresponds to the first cell measurement configuration.

3. A non-terrestrial network NTN communication method, comprising:
receiving, by a terminal, first configuration information, wherein the first configuration information indicates N access configurations configured for the terminal, each of the N access configurations comprises a physical random access channel PRACH configuration and a time-frequency resource location corresponding to a random access opportunity RO, and N is an integer greater than or equal to 1; and
if the terminal satisfies a first effective condition, performing, by the terminal at the time-frequency resource location corresponding to the RO, random access by using a PRACH configuration indicated by a first access configuration in the N access configurations, wherein the first effective condition corresponds to the first access configuration.

4. A non-terrestrial network NTN communication method, comprising:
receiving, by a terminal, first configuration information, wherein the first configuration information indicates N listening configurations configured for the terminal, each of the N listening configurations comprises a time-frequency resource location for listening to a system message, and N is an integer greater than or equal to 1; and
if the terminal satisfies a first effective condition, listening to the system message on a time-frequency resource indicated by a first listening configuration in the N listening configurations, wherein the first effective condition corresponds to the first listening configuration.

5. The method according to any one of claims 1 to 4, wherein the method further comprises:
receiving, by the terminal, second configuration information, wherein the second configuration information comprises M effective conditions, M is an integer greater than or equal to 1, and M is less than or equal to N.

6. The method according to claim 5, wherein the first configuration information indicates the N paging configurations, and the first effective condition comprises one or more of a first time, a first location label, a first frequency, and a first polarization direction that correspond to the first paging configuration; or
the first configuration information indicates the N cell measurement configurations, and the first effective condition comprises one or more of a first time, a first location label, and a first polarization direction that correspond to the first cell measurement configuration; or
the first configuration information indicates the N access configurations, and the first effective condition comprises one or more of a first time, a first location label, a first frequency, and a first polarization direction that correspond to the first access configuration; or
the first configuration information indicates the N listening configurations, and the first effective condition comprises one or more of a first time, a first location label, a first frequency, and a first polarization direction that correspond to the first listening configuration.

7. The method according to any one of claims 1 to 6, wherein the N paging configurations are in a one-to-one correspondence with the M effective conditions; or
N is greater than M, and at least one of the M effective conditions corresponds to at least two paging configurations.

8. The method according to any one of claims 1 to 7, wherein the effective condition comprises a time; and two adjacent times do not overlap, or there is an intersection between two adjacent times.

9. The method according to any one of claims 6 to 8, wherein the effective condition is a location label, and the method further comprises:
sending, by the terminal, location information when a change amount of a location of the terminal within preset duration exceeds a preset threshold, wherein the location information indicates the location of the terminal; and
further receiving, by the terminal, third configuration information before listening to the paging message, wherein the third configuration information indicates at least one paging configuration, and the at least one paging configuration is determined based on the location information.

10. The method according to any one of claims 1 to 9, wherein the first configuration information further comprises identifiers of the N paging configurations.

11. A non-terrestrial network NTN communication method, comprising:
generating first configuration information, wherein the first configuration information indicates N paging configurations configured for a terminal, each of the N paging configurations comprises a time-frequency resource location of a paging message, and N is an integer greater than or equal to 1; and
sending the first configuration information, and if a first effective condition is satisfied, sending the paging message at a time-frequency resource location indicated by a first paging configuration in the N paging configurations, wherein the first effective condition corresponds to the first paging configuration.

12. A non-terrestrial network NTN communication method, comprising:
generating first configuration information, wherein the first configuration information indicates N cell measurement configurations configured for a terminal, one of the N cell measurement configurations comprises a cell frequency set, a time-frequency resource location corresponding to the cell frequency set, and a cell ID set corresponding to the cell frequency set, and N is an integer greater than or equal to 1; and
sending the first configuration information, and if a first effective condition is satisfied, sending a measurement signal of the cell ID set at a time-frequency resource location that corresponds to the cell frequency set and that is indicated by a first cell measurement configuration in the N cell measurement configurations, wherein the first effective condition corresponds to the first cell measurement configuration.

13. A non-terrestrial network NTN communication method, comprising:
generating first configuration information, wherein the first configuration information indicates N access configurations configured for a terminal, each of the N access configurations comprises a physical random access channel PRACH configuration and a time-frequency resource location corresponding to a random access opportunity RO, and N is an integer greater than or equal to 1; and
sending the first configuration information, and if a first effective condition is satisfied, sending a PRACH configuration indicated by a first access configuration in the N access configurations, wherein the first effective condition corresponds to the first access configuration.

14. A non-terrestrial network NTN communication method, comprising:
generating first configuration information, wherein the first configuration information indicates N listening configurations configured for a terminal, each of the N listening configurations comprises a time-frequency resource location for listening to a system message, and N is an integer greater than or equal to 1; and
sending the first configuration information, and if a first effective condition is satisfied, sending the system message on a time-frequency resource indicated by a first listening configuration in the N listening configurations, wherein the first effective condition corresponds to the first listening configuration.

15. The method according to any one of claims 11 to 14, wherein the method further comprises:
sending second configuration information, wherein the second configuration information comprises M effective conditions, M is an integer greater than or equal to 1, and M is less than or equal to N.

16. The method according to claim 15, wherein the first configuration information indicates the N paging configurations, and the first effective condition comprises one or more of a first time, a first location label, a first frequency, and a first polarization direction that correspond to the first paging configuration; or
the first configuration information indicates the N cell measurement configurations, and the first effective condition comprises one or more of a first time, a first location label, and a first polarization direction that correspond to the first cell measurement configuration; or
the first configuration information indicates the N access configurations, and the first effective condition comprises one or more of a first time, a first location label, a first frequency, and a first polarization direction that correspond to the first access configuration; or
the first configuration information indicates the N listening configurations, and the first effective condition comprises one or more of a first time, a first location label, a first frequency, and a first polarization direction that correspond to the first listening configuration.

17. The method according to any one of claims 11 to 16, wherein the N paging configurations are in a one-to-one correspondence with the M effective conditions; or
N is greater than M, and at least one of the M effective conditions corresponds to at least two paging configurations.

18. The method according to any one of claims 11 to 17, wherein the effective condition comprises a time; and two adjacent times do not overlap, or there is an intersection between two adjacent times.

19. The method according to any one of claims 16 to 18, wherein the effective condition is a location label, and the method further comprises:
receiving location information, wherein the location information indicates a location of the terminal; and
sending third configuration information, wherein the third configuration information indicates at least one paging configuration, and the at least one paging configuration is determined based on the location information.

20. The method according to any one of claims 11 to 19, wherein the first configuration information further comprises identifiers of the N paging configurations.

21. A communication apparatus, comprising a transceiver module and a processing module, wherein
the transceiver module is configured to receive first configuration information, wherein the first configuration information indicates N paging configurations configured for the communication apparatus, each of the N paging configurations comprises a time-frequency resource location of a paging message, and N is an integer greater than or equal to 1; and
if the processing module determines that a first effective condition is satisfied, the transceiver module is further configured to listen to the paging message at a time-frequency resource location indicated by a first paging configuration in the N paging configurations, wherein the first effective condition corresponds to the first paging configuration.

22. A communication apparatus, comprising a transceiver module and a processing module, wherein
the transceiver module is configured to: receive first configuration information, wherein the first configuration information indicates N cell measurement configurations configured for the communication apparatus, one of the N cell measurement configurations comprises a cell frequency set, a time-frequency resource location corresponding to the cell frequency set, and a cell ID set corresponding to the cell frequency set, and N is an integer greater than or equal to 1; and
if the processing module determines that a first effective condition is satisfied, measure the cell frequency set at a time-frequency resource location that corresponds to the cell frequency set and that is indicated by a first cell measurement configuration in the N cell measurement configurations, wherein the first effective condition corresponds to the first cell measurement configuration.

23. A communication apparatus, comprising a transceiver module and a processing module, wherein
the transceiver module is configured to: receive first configuration information, wherein the first configuration information indicates N access configurations configured for the communication apparatus, each of the N access configurations comprises a physical random access channel PRACH configuration and a time-frequency resource location corresponding to a random access opportunity RO, and N is an integer greater than or equal to 1; and
if the processing module determines that a first effective condition is satisfied, perform random access at the time-frequency resource location corresponding to the RO by using a PRACH configuration indicated by a first access configuration in the N access configurations, wherein the first effective condition corresponds to the first access configuration.

24. A communication apparatus, comprising a transceiver module and a processing module, wherein
the transceiver module is configured to receive first configuration information, wherein the first configuration information indicates N listening configurations configured for the communication apparatus, each of the N listening configurations comprises a time-frequency resource location for listening to a system message, and N is an integer greater than or equal to 1; and
if the processing module determines that a first effective condition is satisfied, the transceiver module is further configured to listen to the system message on a time-frequency resource indicated by a first listening configuration in the N listening configurations, wherein the first effective condition corresponds to the first listening configuration.

25. The communication apparatus according to any one of claims 21 to 24, wherein the transceiver module is further configured to:
receive second configuration information, wherein the second configuration information comprises M effective conditions, M is an integer greater than or equal to 1, and M is less than or equal to N.

26. The communication apparatus according to claim 25, wherein the first configuration information indicates the N paging configurations, and the first effective condition comprises one or more of a first time, a first location label, a first frequency, and a first polarization direction that correspond to the first paging configuration; or
the first configuration information indicates the N cell measurement configurations, and the first effective condition comprises one or more of a first time, a first location label, and a first polarization direction that correspond to the first cell measurement configuration; or
the first configuration information indicates the N access configurations, and the first effective condition comprises one or more of a first time, a first location label, a first frequency, and a first polarization direction that correspond to the first access configuration; or
the first configuration information indicates the N listening configurations, and the first effective condition comprises one or more of a first time, a first location label, a first frequency, and a first polarization direction that correspond to the first listening configuration.

27. The communication apparatus according to any one of claims 21 to 26, wherein the N paging configurations are in a one-to-one correspondence with the M effective conditions; or
N is greater than M, and at least one of the M effective conditions corresponds to at least two paging configurations.

28. The communication apparatus according to any one of claims 21 to 27, wherein the effective condition comprises a time; and two adjacent times do not overlap, or there is an intersection between two adjacent times.

29. The communication apparatus according to any one of claims 26 to 28, wherein the effective condition is a location label, and the transceiver module is further configured to:
send location information when a change amount of a location within preset duration exceeds a preset threshold, wherein the location information indicates the location of the communication apparatus; and
receive third configuration information before listening to the paging message, wherein the third configuration information indicates at least one paging configuration, and the at least one paging configuration is determined based on the location information.

30. The apparatus according to any one of claims 21 to 29, wherein the first configuration information further comprises identifiers of the N paging configurations.

31. A communication apparatus, comprising a transceiver module and a processing module, wherein
the processing module is configured to generate first configuration information, wherein the first configuration information indicates N paging configurations configured for a terminal, each of the N paging configurations comprises a time-frequency resource location of a paging message, and N is an integer greater than or equal to 1; and
the transceiver module is configured to: send the first configuration information, and if the processing module determines that a first effective condition is satisfied, send the paging message at a time-frequency resource location indicated by a first paging configuration in the N paging configurations, wherein the first effective condition corresponds to the first paging configuration.

32. A communication apparatus, comprising a transceiver module and a processing module, wherein
the processing module is configured to generate first configuration information, wherein the first configuration information indicates N cell measurement configurations configured for a terminal, one of the N cell measurement configurations comprises a cell frequency set, a time-frequency resource location corresponding to the cell frequency set, and a cell ID set corresponding to the cell frequency set, and N is an integer greater than or equal to 1; and
the transceiver module is configured to: send the first configuration information, and if the processing module determines that a first effective condition is satisfied, send a measurement signal of the cell ID set at a time-frequency resource location that corresponds to the cell frequency set and that is indicated by a first cell measurement configuration in the N cell measurement configurations, wherein the first effective condition corresponds to the first cell measurement configuration.

33. A communication apparatus, comprising a transceiver module and a processing module, wherein
the processing module is configured to generate first configuration information, wherein the first configuration information indicates N access configurations configured for a terminal, each of the N access configurations comprises a physical random access channel PRACH configuration and a time-frequency resource location corresponding to a random access opportunity RO, and N is an integer greater than or equal to 1; and
the transceiver module is configured to: send the first configuration information, and if the processing module determines that a first effective condition is satisfied, send a PRACH configuration indicated by a first access configuration in the N access configurations, wherein the first effective condition corresponds to the first access configuration.

34. A communication apparatus, comprising a transceiver module and a processing module, wherein
the processing module is configured to generate first configuration information, wherein the first configuration information indicates N listening configurations configured for a terminal, each of the N listening configurations comprises a time-frequency resource location for listening to a system message, and N is an integer greater than or equal to 1; and
the transceiver module is configured to: send the first configuration information, and if the processing module determines that a first effective condition is satisfied, send the system message on a time-frequency resource indicated by a first listening configuration in the N listening configurations, wherein the first effective condition corresponds to the first listening configuration.

35. The communication apparatus according to any one of claims 31 to 34, wherein the transceiver module is further configured to:
send second configuration information, wherein the second configuration information comprises M effective conditions, M is an integer greater than or equal to 1, and M is less than or equal to N.

36. The communication apparatus according to any one of claims 31 to 35, wherein the first configuration information indicates the N paging configurations, and the first effective condition comprises one or more of a first time, a first location label, a first frequency, and a first polarization direction that correspond to the first paging configuration; or
the first configuration information indicates the N cell measurement configurations, and the first effective condition comprises one or more of a first time, a first location label, a first frequency, and a first polarization direction that correspond to the first cell measurement configuration; or
the first configuration information indicates the N access configurations, and the first effective condition comprises one or more of a first time, a first location label, and a first polarization direction that correspond to the first access configuration; or
the first configuration information indicates the N listening configurations, and the first effective condition comprises one or more of a first time, a first location label, a first frequency, and a first polarization direction that correspond to the first listening configuration.

37. The communication apparatus according to any one of claims 31 to 36, wherein the N paging configurations are in a one-to-one correspondence with the M effective conditions; or
N is greater than M, and at least one of the M effective conditions corresponds to at least two paging configurations.

38. The communication apparatus according to any one of claims 31 to 37, wherein the effective condition comprises a time; and two adjacent times do not overlap, or there is an intersection two adjacent times.

39. The communication apparatus according to any one of claims 36 to 38, wherein the effective condition is a location label, and the transceiver module is configured to:
receive location information, wherein the location information indicates a location of the terminal; and
send third configuration information, wherein the third configuration information indicates at least one paging configuration, and the at least one paging configuration is determined based on the location information.

40. The communication apparatus according to any one of claims 31 to 39, wherein the first configuration information further comprises identifiers of the N paging configurations.

41. A communication apparatus, wherein the communication apparatus comprises a processor and a communication interface, the communication interface is configured to input and/or output information, and the processor is configured to execute a computer program, to enable the communication apparatus to perform the method according to any one of claims 1 to 10, or to enable the communication apparatus to perform the method according to any one of claims 11 to 20.

42. The communication apparatus according to claim 41, wherein the communication apparatus is a chip or a chip system.

43. A computer-readable storage medium, wherein the computer-readable storage medium stores a computer program, and when the computer program is executed by a computer, the method according to any one of claims 1 to 10 is performed, or the method according to any one of claims 11 to 20 is performed.

44. A computer program product comprising instructions, wherein when the computer program product is executed on a computer, the method according to any one of claims 1 to 10 is performed, or the method according to any one of claims 11 to 20 is performed.

45. A computer program, wherein when the computer program is executed on a computer, the method according to any one of claims 1 to 10 is performed, or the method according to any one of claims 11 to 20 is performed.

46. A communication system, comprising the communication apparatus according to any one of claims 21 to 30 and the communication apparatus according to any one of claims 31 to 40.
